# EUROPEAN PATENT APPLICATION

(11) **EP 4 401 361 A1**
(43) Date of publication of application: **17.07.2024**
(21) Application number: 23195068.4
(22) Date of filing: 04.09.2023
(51) Int. Cl.: H04L 12/18

(54) **FILE SHARING SYSTEM AND FILE SHARING PROGRAM**

(30) Priority: 16.01.2023 JP 2023004579
(71) Applicant: FUJIFILM Business Innovation Corp., Minato-ku Tokyo (JP)
(72) Inventor: OKAMOTO, Takuya, Yokohama-shi, Kanagawa (JP)
(74) Representative: Becker Kurig & Partner Patentanwälte mbB

(57) **Abstract**

A file sharing system includes one or plural processors, in which the one or plural processors are configured to: acquire conference time information indicating time at which a remote conference is conducted; acquire participant information that is information related to a plurality of participants who participate in the remote conference; specify a usage file that is used in the remote conference based on the conference time information; and share a file including at least the usage file with each of the plurality of participants.

## Description

### BACKGROUND OF THE INVENTION

### (i) Field of the Invention

The present invention relates to a file sharing system and a file sharing program.

### (ii) Description of Related Art

JP2007-180828A describes a network conference system including a plurality of terminal apparatuses provided with microphones for inputting a voice of an utterer, and a server that is connected to the plurality of terminal apparatuses via a network and stores information related to the utterer. JP2007-180828A discloses that the server includes an utterer specifying unit that specifies the utterer and an utterance time based on terminal specifying information transmitted from at least one terminal apparatus, a voice text storage unit that converts the voice of the specified utterer into a text and stores voice text together with the utterance time, an image storage unit that stores an image file that is used as a material for a network conference and a display time of the image file, and a minutes creation unit that creates a minutes file associated with the voice text, the utterance time, the image file, and the display time.

### SUMMARY OF THE INVENTION

For example, in a remote conference, in a case in which a page in a file is displayed during the remote conference, images of a screen on which this page is displayed may be organized in time, and may be shared with a plurality of participants who participate in the remote conference after the remote conference is finished.

Here, the page or the file needed during the remote conference may not be displayed due to a time-out or the like. In this case, in order to assist the contents of the remote conference, the participant should organize the pages or the files that are not displayed during the remote conference and share the pages or the files with other participants who participate in the remote conference, in addition to sharing of the images on the screen.

An object of the present invention is to improve the efficiency of work of sharing the contents of the remote conference, as compared with a case in which only the page displayed during the remote conference is shared.

According to a first aspect of the present disclosure, there is provided a file sharing system including one or a plurality of processors, in which the one or plurality of processors are configured to: acquire conference time information indicating time at which a remote conference is conducted; acquire participant information that is information related to a plurality of participants who participate in the remote conference; specify a usage file that is used in the remote conference based on the conference time information; and share a file including at least the usage file with each of the plurality of participants.

According to a second aspect of the present disclosure, there is provided the file sharing system according to the first aspect, in which the one or plurality of processors may be configured to: share the usage file that is designated by the participant from among specified usage files with the plurality of participants.

According to a third aspect of the present disclosure, there is provided the file sharing system according to the second aspect, in which the participant who designates the usage file may be a participant who uses the usage file during the remote conference.

According to a fourth aspect of the present disclosure, there is provided the file sharing system according to the second aspect, in which the participant who designates the usage file may be another participant being different from a participant who uses the usage file during the remote conference and having authority to designate the usage file.

According to a fifth aspect of the present disclosure, there is provided the file sharing system according to any one of the first to fourth aspects, in which the file may include the usage file and a non-usage file that is not used in the remote conference.

According to a sixth aspect of the present disclosure, there is provided the file sharing system according to the fifth aspect, in which the non-usage file may be a related file that is related to the usage file.

According to a seventh aspect of the present disclosure, there is provided the file sharing system according to the sixth aspect, in which the one or plurality of processors may be configured to: display the specified usage file and the related file to be identifiable in a case in which the participant designates a file to be shared.

According to an eighth aspect of the present disclosure, there is provided the file sharing system according to any one of the first to seventh aspects, in which the one or plurality of processors may be configured to: receive designation of a file that is not shared with each of the plurality of participants; and not share the file that is designated not to be shared by the participant, with each of the plurality of participants.

According to a ninth aspect of the present disclosure, there is provided the file sharing system according to any one of the first to eighth aspects, in which the one or plurality of processors may be configured to: make a display mode different between the usage file and a non-usage file that is not used in the remote conference among files that are shared.

According to a tenth aspect of the present disclosure, there is provided the file sharing system according to any one of the first to ninth aspects, in which the one or plurality of processors may be configured to: make a display mode different between a page that is used during the remote conference and a page that is not used during the remote conference among files that are shared.

According to an eleventh aspect of the present disclosure, there is provided the file sharing system according to any one of the first to tenth aspects, in which the one or plurality of processors may be configured to: in a case in which a plurality of shared files that are shared are displayed on a display unit, display attribute information indicating an attribute of a shared file on the display unit in correspondence with each of the shared files.

According to a twelfth aspect of the present disclosure, there is provided the file sharing system according to any one of the first to eleventh aspects, in which the one or plurality of processors may be configured to: in a case in which a condition related to sharing is satisfied, share the file including at least the usage file with each of the plurality of participants.

According to a thirteenth aspect of the present disclosure, there is provided the file sharing system according to the twelfth aspect, in which the condition related to the sharing may be that all the participants of the remote conference have completed a setting related to the sharing.

According to a fourteenth aspect of the present disclosure, there is provided the file sharing system according to the thirteenth aspect, in which the one or plurality of processors may be configured to: in a case in which another participant being different from a participant who uses the usage file during the remote conference and having authority to designate the usage file has completed the setting, specify that all the participants of the remote conference have completed the setting.

According to a fifteenth aspect of the present disclosure, there is provided a file sharing program causing a computer to realize: a function of acquiring conference time information indicating time at which a remote conference is conducted; a function of acquiring participant information that is information related to a plurality of participants who participate in the remote conference; a function of specifying a usage file that is used in the remote conference based on the conference time information; and a function of sharing a file including at least the usage file with each of the plurality of participants.

According to the first aspect of the present disclosure, it is possible to improve the efficiency of the work of sharing the contents of the remote conference, as compared with a case in which only the page displayed during the remote conference is shared.

According to the second aspect of the present disclosure, it is possible to improve the efficiency of the work of sharing the needed information in the contents of the remote conference, as compared with a case in which all the files that are used are shared.

According to a third aspect of the present disclosure, it is possible to improve the efficiency of the work of selecting the needed information in the contents of the remote conference, as compared with a configuration in which the participant who does not uses the file that is used during the remote conference is made to determine whether or not to share the file.

According to a fourth aspect of the present disclosure, it is possible to improve the efficiency of the work of selecting the needed information in the contents of the remote conference, as compared with a configuration in which only the participant who uses the file that is used during the remote conference is made to determine whether or not to share the file.

According to the fifth aspect of the present disclosure, it is possible to supplement the contents of the remote conference, as compared with a case in which only the file that is used during the remote conference is shared.

According to a sixth aspect of the present disclosure, it is possible to share the file related to the file that is used during the remote conference.

According to a seventh aspect of the present disclosure, it is possible to improve the efficiency of the work of distinguishing and selecting the usage file and the related file, as compared with a configuration in which the display modes of the usage file and the related file are made uniform in a case in which the file to be shared is designated.

According to an eighth aspect of the present disclosure, it is possible to prevent the information that the participant does not want to share after the remote conference from being viewed from the other participant after the remote conference.

According to a ninth aspect of the present disclosure, it is possible to notify the participant of the file that is used during the remote conference after the remote conference in a case in which the files that are shared are viewed.

According to a tenth aspect of the present disclosure, it is possible to notify the participant of the page used during the remote conference after the remote conference in a case in which the files that are shared are viewed.

According to the eleventh aspect of the present disclosure, it is possible to notify the participant of the attribute information of the file included in the files that are shared in a case in which the files that are shared are viewed.

According to the twelfth aspect of the present disclosure, it is possible to secure a period for selecting the information related to the contents of the remote conference before the file is shared.

According to a thirteenth aspect of the present disclosure, it is possible to make all the participants select the information related to the contents of the remote conference before the file is shared.

According to the fourteenth aspect of the present disclosure, it is possible to select the information related to the contents of the remote conference before the file is shared.

According to the fifteenth aspect of the present disclosure, it is possible to improve the efficiency of the work of sharing the contents of the remote conference, as compared with a case in which only the page displayed during the remote conference is shared.

### BRIEF DESCRIPTION OF THE DRAWINGS

Exemplary embodiment(s) of the present invention will be described in detail based on the following figures, wherein:
Fig. 1 is a diagram showing an example of a configuration of a file sharing system according to the present exemplary embodiment;
Fig. 2 is a diagram showing an example of a configuration of a user terminal, a file management server, and a remote conference server according to the present exemplary embodiment;
Fig. 3 is a diagram showing an example of a functional configuration of the user terminal according to the present exemplary embodiment;
Figs. 4A and 4B are diagrams showing an example of a display example in a display unit to which the present exemplary embodiment is applied, in which Fig. 4A is a diagram showing a state in which a file is not used, and Fig. 4B is a diagram showing a state in which a file "contract" is used;
Fig. 5 is a diagram showing an example of a functional configuration of the file management server according to the present exemplary embodiment;
Figs. 6A to 6C show an example of classification of the files, in which Fig. 6A shows an example of classification of the files based on use by a participant, Fig. 6B shows an example of classification of usage files, and Fig. 6C shows an example of classification of related files;
Fig. 7 is a flowchart showing a flow of processing in which the file management server according to the present exemplary embodiment shares a shared file;
Figs. 8A and 8B are diagrams showing another example of the display of the operation screen to which the present exemplary embodiment is applied, in which Fig. 8A shows an example of a screen that receives input of conference information of a remote conference, and Fig. 8B shows an example of a screen that receives input of participant information of the remote conference;
Fig. 9 is a diagram showing another example of the display of the display unit of the user terminal according to the present exemplary embodiment;
Fig. 10 is a diagram showing still another example of the display of the display unit of the user terminal according to the present exemplary embodiment;
Fig. 11 is a diagram showing an example of usage information;
Fig. 12 is a diagram showing still another example of the display of the operation screen to which the present exemplary embodiment is applied;
Fig. 13 is a diagram showing an example of the shared file to which the present exemplary embodiment is applied;
Figs. 14A and 14B are diagrams showing still another example of the display of the operation screen to which the present exemplary embodiment is applied, in which Fig. 14A shows a state in which a page of the usage file is designated, and Fig. 14B shows a state in which a page stop button is selected;
Figs. 15A and 15B are diagrams for describing processing of stopping sharing of an entire designated page, in which Fig. 15A shows an example of a screen that receives a setting related to the stop of the sharing of the entire page, and Fig. 15B shows an example of the shared file in which the sharing of the entire page is stopped;
Figs. 16A and 16B are diagrams for describing processing of stopping sharing of a part of the designated page, in which Fig. 16A shows an example of a screen that receives a setting related to the stop of the sharing of a part of a first page of the file "contract", and Fig. 16B shows an example of a screen that receives a setting related to the stop of the sharing of a part of a first page of a file "confidentiality contract";
Figs. 17A and 17B are diagram for describing processing of stopping the sharing of a part of a selected page, in which Fig. 17A is a diagram showing a screen that receives a setting related to the stop of the sharing of a part of the first page of the file "contract", and Fig. 17B is a diagram showing a shared file in which the sharing of the part of the page is stopped;
Fig. 18 is a diagram showing still another example of the display of the operation screen to which the present exemplary embodiment is applied;
Figs. 19A and 19B are diagrams for describing processing of sharing the related file that is related to the usage file, in which Fig. 19A shows an example of a screen that receives a setting related to specifying of the related file, and Fig. 19B shows an example of a screen for checking the related file included in the shared file;
Figs. 20A and 20B are diagrams showing another example of the screen for checking the related file included in the shared file, in which Fig. 20A is a diagram showing a state in which a range in which the related file is specified is enlarged, and Fig. 20B is a diagram showing a state in which the range in which the related file is specified is reduced;
Fig. 21 is a diagram showing still another example of the display of the operation screen to which the present exemplary embodiment is applied;
Fig. 22 is a diagram showing an example of the shared file of which the related file is also shared;
Figs. 23A and 23C are diagrams showing another example of the shared file to which the present exemplary embodiment is applied, in which Fig. 23A is a diagram showing a state in which a page image of a page that is used in the remote conference is displayed, Fig. 23B is a diagram showing a state in which a page image of a page that is not used in the remote conference in the usage file is displayed, and Fig. 23C is a diagram showing a state in which a page image of a page included in the related file is displayed;
Fig. 24 is a flowchart showing a flow of processing of giving notification of a setting related to the shared file by a sharing result output unit of the file management server according to the present exemplary embodiment;
Fig. 25 is a diagram showing an example of a configuration of a file sharing system to which the present exemplary embodiment is applied; and
Fig. 26 is a diagram showing an example of a configuration of a file sharing system to which the present exemplary embodiment is applied.

### DETAILED DESCRIPTION OF THE INVENTION

Hereinafter, an exemplary embodiment of the present invention will be described in detail with reference to drawings.

### [File Sharing System 1]

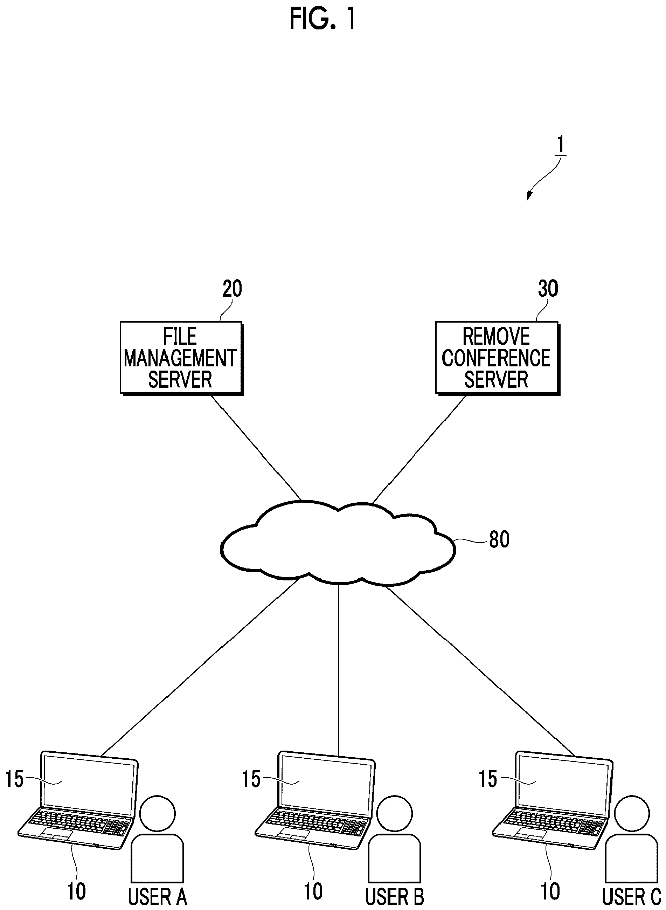

Fig. 1 is a diagram showing an example of a configuration of a file sharing system 1 to which the present exemplary embodiment is applied.

The file sharing system 1 according to the present exemplary embodiment is configured by connecting a user terminal 10 that is a terminal operated by a user, a file management server 20 that manages a file of the user, and a remote conference server 30 that enables each user to participate in a remote conference via the user terminal 10 via a communication line 80. The communication line 80 is, for example, a line, such as the Internet, and is used for information communication between the user terminal 10 and the file management server 20 or information communication between the user terminal 10 and the remote conference server 30.

Here, in the present exemplary embodiment, the "file" is an electronic file stored in the file management server 20 and the like. This file includes image data, moving image data, sound data, text data, a program, or a combination of at least two of the image data, the moving image data, the sound data, the text data, and the program. In addition, the file may include attribute information, such as a file creation date and time, a update date and time, a creator, an editor, a paper size, the number of pages, a file name, and a keyword in the file. A format of the file is not particularly limited, but the format of the file managed by the file management server 20 may be limited.

In addition, in the present exemplary embodiment, the "remote conference" is a conference of a form in which each user participates by using the user terminal 10 connected via the communication line 80, and also includes a meeting, a lecture, a seminar, a class, or the like in addition to a business conference. It should be noted that the remote conference may be referred to as, for example, a web conference, an online conference, a remoteness conference, and a video conference.

In the example of Fig. 1, a user A, a user B, and a user C can have a dialogue by the remote conference via the communication line 80. Each user conducts the remote conference while using, for example, the file managed by the file management server 20. "Use" means that an image is displayed in a form in which the contents of the file can be referred to. For example, in a case in which an instruction to refer to the contents of one file is received and the image corresponding to the contents of the one file is displayed, the one file is in use.

The user terminal 10 according to the present exemplary embodiment is an information processing apparatus operated by the user to participate in the remote conference. Each of the user terminals 10 includes a display unit 15 including a liquid crystal display panel, which displays an image, text information, or the like to the user, an organic electro luminescence (EL) display panel, or the like. The user terminal 10 is realized by, for example, a computer apparatus, a tablet type information terminal, a smartphone, a game device, or another information processing apparatus.

It should be noted that, in the file sharing system 1 shown in Fig. 1, three user terminals 10 are disposed, but the present invention is not limited to this. It suffices that two or more users can use a service of the file management server 20 and a service of the remote conference server 30 during the remote conference, and it is sufficient that two or more user terminals 10 are disposed.

The file management server 20 according to the present exemplary embodiment is an information processing apparatus that provides a service (hereinafter, referred to as a "file management service") for managing the file.

For example, the file management server 20 provides a saving place for saving the file as the file management service. The saved file may be viewed by the user who gives an instruction to save the file, and may also be shared with another user different from the user who gives the instruction to save the file. In addition, the contents of the saved file may be changed, or the saved file itself may be deleted or duplicated, in response to a request received from the user terminal 10.

It should be noted that, in the file sharing system 1 shown in Fig. 1, the file management server 20 is configured by one server, but may be configured by a plurality of servers. In addition, the file management server 20 may be configured as a so-called cloud server, or may be configured as an on-premises type server.

The remote conference server 30 according to the present exemplary embodiment is an information processing apparatus that provides a service (hereinafter, referred to as a "remote conference service") for managing the remote conference in which each user participates via the user terminal 10.

For example, as the remote conference service, the remote conference server 30 transmits and receives data acquired in the user terminal 10 to the user terminal 10 of a participant who is the user participating in the remote conference. The data to be transmitted and received is digital data of a voice including an utterance voice of the participant, or digital data of a moving image or a still image including a captured image of a state of the participant.

It should be noted that, in the file sharing system 1 shown in Fig. 1, the remote conference server 30 is configured by one server, but may be configured by a plurality of servers. In addition, the remote conference server 30 may be configured as a so-called cloud server, or may be configured as an on-premises type server.

Hereinafter, a case will be assumed in which a presenter among the participants of the remote conference gives an instruction to display the image displayed on the display unit 15 of the user terminal 10 of the presenter in synchronization on the display unit 15 of the user terminal 10 used by a listener among the participants of the remote conference. Stated another way, a case will be assumed in which the presenter of the remote conference gives an instruction to share the image displayed on the display unit 15 of the user terminal 10 of the presenter with the display unit 15 of the user terminal 10 used by the listener of the remote conference.

It should be noted that, in a case in which there is no need to distinguish between the presenter and the listener of the remote conference, the presenter and the listener may be referred to as the participant.

Here, an overview of a function of the file management server 20 to which the file sharing system 1 according to the present exemplary embodiment is applied will be described.

The file management server 20 holds the file saved by the participant. The file held by the file management server 20 is used in response to an operation by the participant on the user terminal 10. After the remote conference is finished, the file management server 20 shares the file including the file (hereinafter, referred to as a "usage file") that is used in the remote conference with each of a plurality of participants.

Since the file management server 20 according to the present exemplary embodiment has the functions described above to share the usage file itself used by the participant in the remote conference with the participants. Specifically, according to the present exemplary embodiment, there is no need to organize, in order to share the contents of the remote conference, a page that is not displayed in a case in which the displays of the display unit 15 are synchronized or the contents of the file that is not used in a case in which the displays of the display unit 15 are synchronized.

In the present exemplary embodiment, it is intended that the user of the file management server 20 reduces the effort or time for organizing information that is not shared during the remote conference, information that is only orally explained in the remote conference, or the like, and contributes to improving the efficiency of the work of sharing the contents of the remote conference.

Hereinafter, the file sharing system 1 according to the present exemplary embodiment will be described in detail.

### [Hardware Configuration]

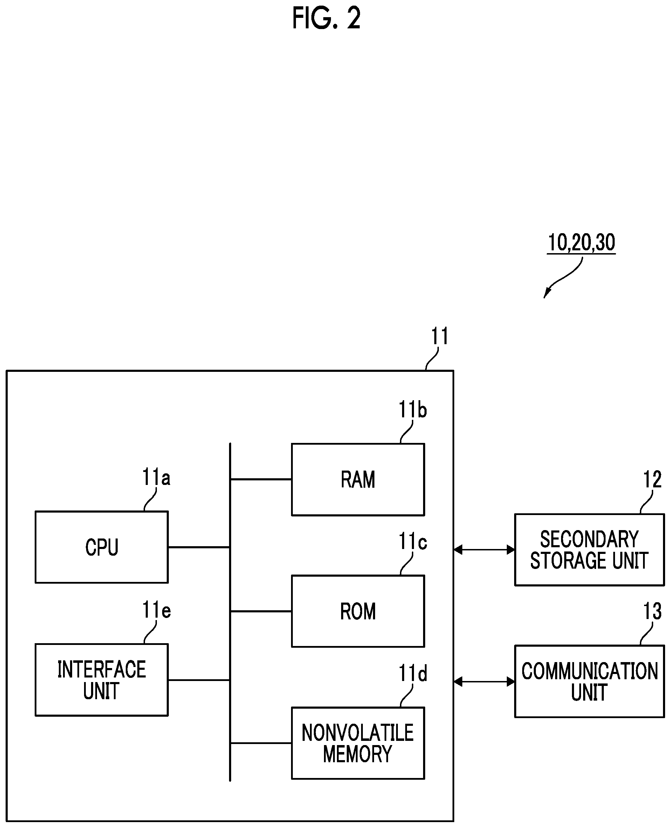

Fig. 2 is a diagram showing an example of a configuration of the user terminal 10, the file management server 20, and the remote conference server 30 according to the present exemplary embodiment.

Each apparatus of the user terminal 10, the file management server 20, and the remote conference server 30 according to the present exemplary embodiment includes a control unit 11 that controls the operation of the entire apparatus, a secondary storage unit 12 in which various types of information are recorded, and a communication unit 13 that transmits and receives the information via the communication line 80 (refer to Fig. 1). It should be noted that the control unit 11, the secondary storage unit 12, and the communication unit 13 are connected to each other through a bus or a signal line.

The control unit 11 includes a CPU 11a that controls the entire apparatus as an example of a processor, a RAM 1 1b that is used as a work memory of the CPU 11a, and a ROM 11c that saves a program or the like executed by the CPU 11a. In addition, the control unit 11 includes a rewritable nonvolatile memory 11d that can hold data even in a case in which the power supply is interrupted, and an interface unit 11e that controls each unit, such as the communication unit 13 connected to the control unit 11.

The nonvolatile memory 11d is configured by, for example, an SRAM or a flash memory backed up by a battery. In addition, in a case in which the control unit 11 reads the program stored in the secondary storage unit 12, each processing is executed by each apparatus according to the present exemplary embodiment.

The secondary storage unit 12 is configured by, for example, a hard disk device (HDD) or a semiconductor memory. The secondary storage unit 12 is different depending on a product form of each apparatus. The secondary storage unit 12 stores the program executed by the control unit 11 or various types of information.

In addition, the user terminal 10 includes an input device, such as a keyboard and a mouse, and the display unit 15 (refer to Fig. 1) configured by a liquid crystal display or the like. In a case in which the input device is a touch panel in the user terminal 10, the input device may be provided integrally with the display unit 15.

### [Functional Configuration of User Terminal 10]

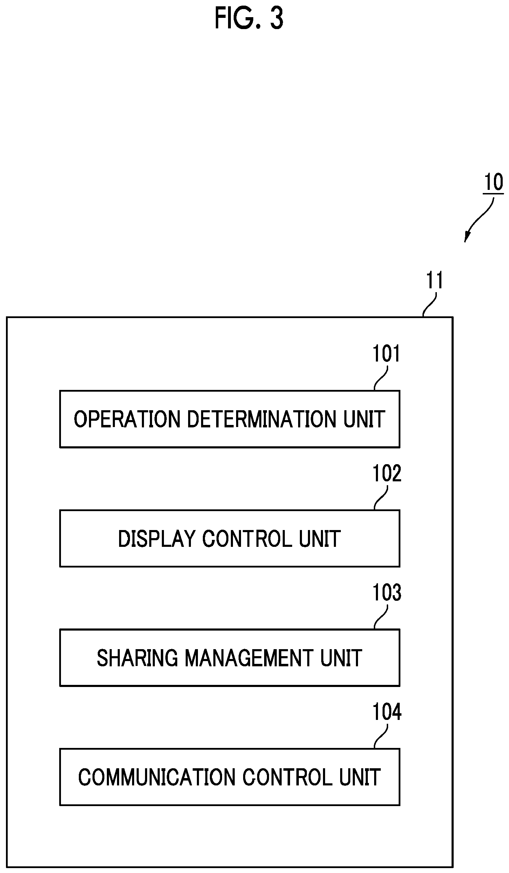

Fig. 3 is a diagram showing an example of a functional configuration of the user terminal 10 according to the present exemplary embodiment. Each of the functions of the user terminal 10 shown in Fig. 3 is generally realized by the CPU 11a of the control unit 11.

As shown in Fig. 3, the user terminal 10 includes an operation determination unit 101, a display control unit 102, a sharing management unit 103, and a communication control unit 104.

The operation determination unit 101 determines whether or not a user operation is performed on the user terminal 10 via an input device or the like. The user operation is, for example, an operation of giving an instruction to start or finish the remote conference, an operation of giving an instruction to select a file to be used, and an operation of giving an instruction to perform a setting related to the sharing of the file.

The display control unit 102 controls a display mode and the like on the display unit 15. Specifically, the display control unit 102 controls a display mode of a screen displayed on the display unit 15. For example, a display mode of a screen in a case of using the remote conference service, a screen in a case of using the file management service, or the like is controlled.

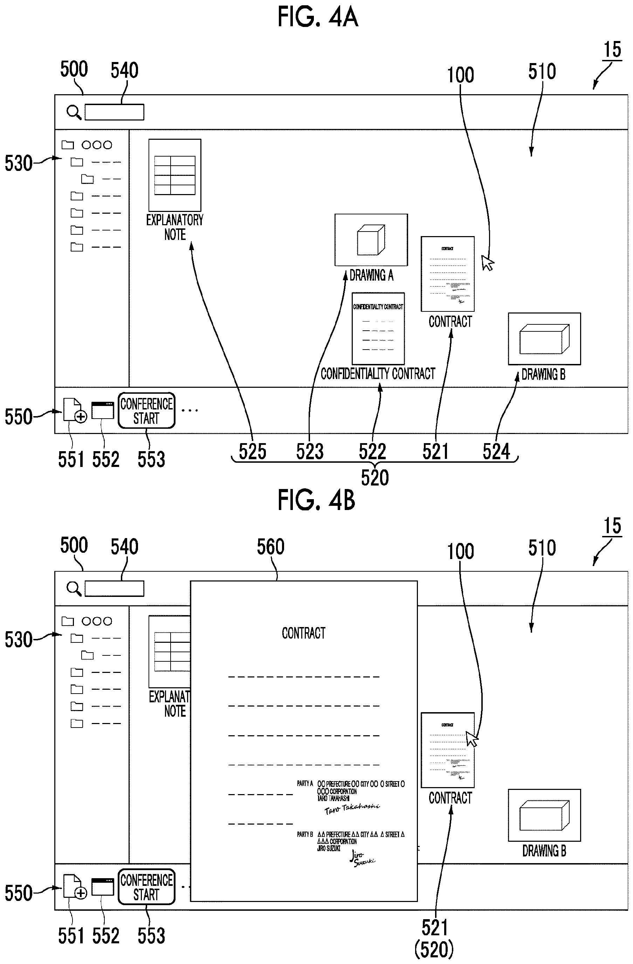

Here, the display on the display unit 15 provided in the user terminal 10 will be described with reference to Figs. 4A and 4B.

Figs. 4A and 4B are diagrams showing an example of a display example in the display unit 15 to which the present exemplary embodiment is applied, in which Fig. 4A is a diagram showing a state in which the file is not used, and Fig. 4B is a diagram showing a state in which a file "contract" is used.

In the display example shown in Fig. 4A, a screen in a case of using the file management service is displayed on the display unit 15 of the user terminal 10 according to the present exemplary embodiment. Specifically, the display unit 15 displays a cursor 100 indicating an operation portion of the user on the display unit 15, and an operation screen 500 that receives the operation of the user.

The cursor 100 is an example of a pointer image, and is moved in response to an operation of a mouse or the like by the user. The user moves the cursor 100 to a position expected by the user on the display unit 15, and selects an element displayed on the display unit 15.

A workspace 510 on so-called file handling software is displayed on the operation screen 500. The file handling software is software that manages the electronic file, and has a function of promoting centralized management of paper and electronic data.

In addition, on the operation screen 500, a folder selection field 530 for receiving the selection of a folder in which the files are accommodated, a search window 540 for receiving a search for the saved files, and a toolbar 550 for receiving an instruction to execute various types of processing that can be executed by the file handling software may be displayed.

The workspace 510 is an area in which a file icon 520 or the like corresponding to the file and representing the file is disposed. Also, the workspace 510 also functions as an area for displaying the contents of the file in a case in which the file is used.

The file icon 520 (521, 522, 523, 524, and 525) as an example of an image for receiving an instruction to refer to the contents of the file is an image that is displayed corresponding to each of the files. The file icon 520 is configured by, for example, an image representing the contents of the file using a picture, a symbol, or character information. In a case in which the corresponding file is the image data, the file icon 520 is displayed, for example, with a reduced image represented by the image data.

Examples of the instruction received by the file icon 520 include an instruction to open the corresponding file or an instruction to enlarge the image displayed in a reduced size. In addition, the file icon 520 may receive, for example, an instruction to designate the corresponding file, an instruction to change the saving place of the corresponding file, and an instruction to change a display position of the file icon 520.

It should be noted that the file icons 521, 522, 523, 524, and 525 shown in Fig. 4A correspond to different files "contract", "confidentiality contract", "drawing A", "drawing B", and "explanatory note", respectively.

The folder selection field 530 is an area displayed in a state in which each of the folders in which the files are accommodated can be identified. In a case of selecting the folder, the user selects a picture, a symbol, or character information which is displayed in the folder selection field 530 and corresponds to the folder.

The search window 540 is an image for receiving the search from the user. In a case in which a character string is input to the search window 540, for example, search processing using the input character string is executed for the file on the workspace 510 displayed on the operation screen 500.

The toolbar 550 is an instruction unit that receives an instruction from the user. The toolbar 550 is an instruction unit provided as standard by, for example, a provider of the file handling software. One or a plurality of images that receive instructions to execute various types of processing that can be executed by the file handling software are provided. The type of the image and the contents of the corresponding processing may be changed based on the instruction of the user.

In the example shown in Fig. 4A, the toolbar 550 includes a new creation button 551 for receiving an instruction to execute processing of creating a new file, a property button 552 for receiving an instruction to execute processing of editing a property of the file, and a conference start button 553 for receiving an instruction to execute processing of recording start time of the remote conference. In the present exemplary embodiment, in a case in which the processing of recording the start time of the remote conference is executed, the user who selects the conference start button 553 is specified as the participant participating in the remote conference from the recorded start time.

In the present exemplary embodiment, in a case in which the file icon 520 is selected, the contents of the file corresponding to the file icon 520 are displayed in a form that can be referred to by the user. In a case in which an instruction to open the file corresponding to the file icon 520 is received, or in a case in which an instruction to enlarge the image displayed in a reduced size in the file icon 520 is received, the corresponding file icon 520 is in the selected state.

An image (not shown) displayed by opening the file corresponding to the file icon 520 and an enlarged image 560 (described below) in which the image displayed in a reduced size in the file icon 520 is enlarged are examples of the image corresponding to the contents of the file.

For example, in a case in which the cursor 100 is continuously positioned at the file icon 521 although a click operation is not performed on the file icon 521 as shown in Fig. 4A, the enlarged image 560 corresponding to the file icon 521 is displayed as shown in Fig. 4B.

In addition, for example, in a case in which a button (not shown) for receiving an instruction to display the enlarged image 560 corresponding to the file icon 521 is selected, the enlarged image 560 may be displayed as shown in Fig. 4B.

The enlarged image 560 is an image having a larger display size than the file icon 520 as a source of the display of the enlarged image 560. In the example shown in Fig. 4B, the enlarged image 560 corresponding to the file icon 521 has a larger display size than the file icon 521.

Here, "large display size" is synonymous with large display area. It should be noted that, in the present specification, similarly, a case in which the display size is large means that the display area is large. In addition, a case in which the display size is small means that the display area is small.

In the present exemplary embodiment, the enlarged image 560 is displayed at a portion adj acent to the file icon 520 as the source of the display of the enlarged image 560. In addition, the enlarged image 560 may be displayed on a side on which a larger margin among the margins present on the left and right sides of the file icon 520 is positioned.

In addition, for example, the enlarged image 560 may be displayed at a position closer to the center of the workspace 510 displayed on the display unit 15 in a hierarchy (user side) higher than a display hierarchy of the file icon 520 as the source of the display of the enlarged image 560.

In the present exemplary embodiment, the shape of the enlarged image 560 and the shape of the file icon 520 as the source of the display of the enlarged image 560 have a similar relationship.

It should be noted that the present invention is not limited to such a display form, and the enlarged image 560 may display contents different from the display contents of the file icon 520 as the source of the display of the enlarged image 560. In addition, the shape of the enlarged image 560 and the shape of the file icon 520 as the source of the display of the enlarged image 560 may have a dissimilar relationship.

In the present exemplary embodiment, in a case in which an instruction to remove the display of the enlarged image 560 is received in a state in which the enlarged image 560 is displayed, the display of the enlarged image 560 is removed. Stated another way, in the present exemplary embodiment, in a case in which the instruction to remove the display of the enlarged image 560 is received in a state in which the enlarged image 560 is displayed, the enlarged image 560 is hidden.

For example, in a case in which the display of the enlarged image 560 is removed in a case in which the cursor 100 is moved away from the file icon 521, the enlarged image 560 is hidden in a case in which the user moves the cursor 100 away from the file icon 521.

In addition, for example, in a case in which the display of the enlarged image 560 is maintained even in a case in which the cursor 100 is moved away from the file icon 521, the enlarged image 560 is hidden in a case in which a button (not shown) for receiving the instruction to remove the display of the enlarged image 560 from the user is selected.

Returning to the description of Fig. 3.

The sharing management unit 103 manages information related to the sharing of the file. Specifically, the sharing management unit 103 manages information used in the file management service for using a service of sharing the file with each of the plurality of participants after the remote conference.

Examples of the information managed by the sharing management unit 103 include information related to the file itself (hereinafter, referred to as a "shared file") that is shared with each of the plurality of participants after the remote conference, information indicating candidates for the shared file, information indicating a usage status of each file, or attribute information of each file.

The communication control unit 104 processes the information transmitted by the communication unit 13, or processes the received information.

The communication control unit 104 requests the file management server 20 to provide the file management service or requests the remote conference server 30 to provide the remote conference service, via the communication unit 13.

In addition, the communication control unit 104 extracts needed information from the information transmitted from the file management server 20 or the remote conference server 30 via the communication unit 13. Stated another way, the communication control unit 104 processes and determines the acquired information.

### [Functional Configuration of File Management Server 20]

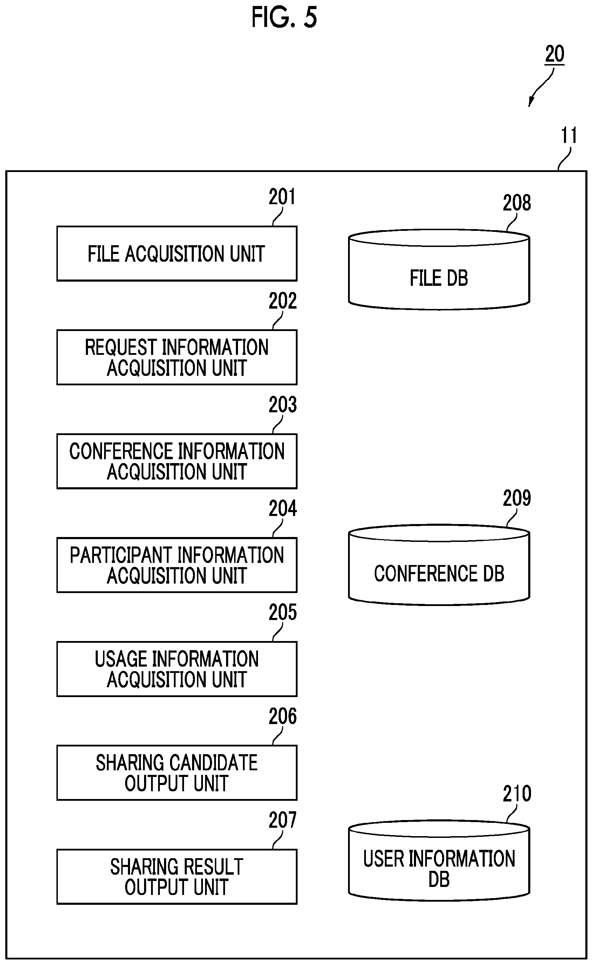

Fig. 5 is a diagram showing an example of a functional configuration of the file management server 20 according to the present exemplary embodiment. Each of the functions of the file management server 20 shown in Fig. 5 is generally realized by the CPU 11a of the control unit 11.

As shown in Fig. 5, the file management server 20 includes a file acquisition unit 201, a request information acquisition unit 202, a conference information acquisition unit 203, a participant information acquisition unit 204, a usage information acquisition unit 205, a sharing candidate output unit 206, a sharing result output unit 207, a file database (DB) 208, a conference DB 209, and a user DB 210.

The file acquisition unit 201 acquires information, such as the image data corresponding to the contents of the file. Specifically, the file acquisition unit 201 acquires the information, such as the image data corresponding to the contents of the file, from various types of information received from other apparatuses or various types of information stored in the secondary storage unit 12 of the file management server 20. Examples of other apparatuses include the user terminal 10.

The file acquisition unit 201 saves the acquired information, such as the image data corresponding to the contents of the file, in the file DB 208.

The request information acquisition unit 202 acquires request information indicating a request of the user via the user terminal 10. Specifically, the request information acquisition unit 202 causes the user to input the request via the user terminal 10, and acquires the request information input by the user via the communication line 80.

It should be noted that the method of acquiring the request information by the request information acquisition unit 202 is not limited to the method described above.

The conference information acquisition unit 203 acquires conference information related to the remote conference conducted while using the file management service. Specifically, the conference information acquisition unit 203 acquires the conference information from various types of information received from other apparatuses. It should be noted that the conference information includes, for example, conference time information indicating time at which the remote conference is conducted, in addition to identification information of the remote conference.

The conference information acquisition unit 203 saves the acquired conference information in the conference DB 209.

The participant information acquisition unit 204 acquires user information of the user participating in the remote conference among the users who use the file management service. Specifically, the participant information acquisition unit 204 acquires the user information of the participant of the remote conference from the user information saved in the user DB 210. For example, from the user information saved in the user DB 210, the user information of the user whose information for associating the users who conduct the remote conference as the participants of the remote conference with each other is matched is acquired.

The participant information acquisition unit 204 saves the acquired user information of the participant of the remote conference in the conference DB 209.

The usage information acquisition unit 205 acquires usage information related to the usage file that is used in the remote conference. Specifically, the usage information acquisition unit 205 acquires the usage information based on the request information acquired by the request information acquisition unit 202. It should be noted that the usage information includes, for example, information indicating time at which the usage file is used, or information indicating the user who uses the usage file, in addition to identification information of the usage file.

The usage information acquisition unit 205 saves the acquired usage information in the conference DB 209.

The sharing candidate output unit 206 specifies the candidates for the shared file, and outputs information related to the candidates for the shared file to the user terminal 10. Specifically, the sharing candidate output unit 206 specifies the candidates for the shared file from among the files that can be used by the file management service, based on the information related to the remote conference saved in the conference DB 209. The sharing candidate output unit 206 outputs the information related to the candidates for the shared file to the user terminal 10 via the communication unit 13.

In a case of the present exemplary embodiment, the candidates for the shared file include the usage file that is used by the participant of the remote conference. In addition, the file (hereinafter, referred to as a "non-usage file") is not used by the participant of the remote conference may be included in the candidates for the shared file.

Here, classification of the files that can be used by the file management service will be described.

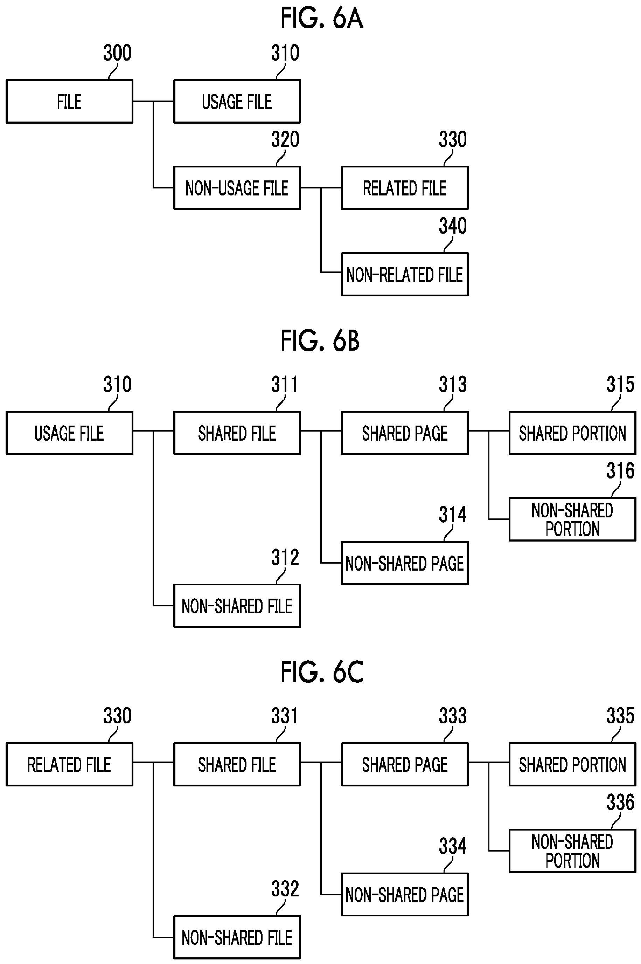

Figs. 6A to 6C show an example of the classification of the files, in which Fig. 6A shows an example of the classification of the files based on use by the participant, Fig. 6B shows an example of the classification of the usage files, and Fig. 6C shows an example of the classification of the related files.

In Fig. 6A, files 300 that can be used by the file management service are classified in response to the operation of the participant.

In a case of the present exemplary embodiment, the files 300 are classified into a usage file 310 that is used in the remote conference and a non-usage file 320 that is not used in the remote conference.

In addition, the non-usage files 320 are classified into a file (hereinafter, referred to as "related file") 330 that is not used by the participant of the remote conference but is related to the usage file 310, and a file (hereinafter, referred to as "non-related file") 340 that is not related to the usage file 310.

In Fig. 6B, the usage files 310 are further classified based on whether or not the usage file 310 is shared with each of the plurality of participants after the remote conference.

In a case of the present exemplary embodiment, the usage files 310 are classified into a shared file 311 that is shared with each of the plurality of participants after the remote conference and a file (hereinafter, referred to as a "non-shared file") 312 that is not shared with each of the plurality of participants after the remote conference. Specifically, for example, the usage files 310 specified as the candidates for the shared file are classified into the shared file 311 that is designated to be shared by the participant and the non-shared file 312 that is not designated to be shared by the participant.

In addition, for example, the usage files 310 specified as the candidates for the shared file are classified into the shared file 311 that is not designated not to be shared by the participant and the non-shared file 312 that is designated not to be shared by the participant.

In addition, the pages of the shared file 311 and the portions in each page of the shared file 311 may be classified based on whether or not the pages are shared with each of the plurality of participants after the remote conference.

For example, the shared files 311 are classified into a page (hereinafter, referred to as a "shared page") 313 that is shared with each of the plurality of participants after the remote conference and a page (hereinafter, referred to as a "non-shared page") 314 that is not shared with each of the plurality of participants after the remote conference.

In addition, for example, the shared pages 313 are classified into a portion (hereinafter, referred to as a "shared portion") 315 that is shared with each of the plurality of participants after the remote conference and a portion (hereinafter, referred to as a "non-shared portion") 316 that is not shared with each of the plurality of participants after the remote conference.

In Fig. 6C, similarly to the usage file 310, the related files 330 are further classified based on whether or not the related file 330 is shared with each of the plurality of participants after the remote conference.

In a case of the present exemplary embodiment, the related files 330 are classified into a shared file 331 that is shared with each of the plurality of participants after the remote conference and a non-shared file 332 that is not shared with each of the plurality of participants after the remote conference.

In addition, for example, the shared files 331 are classified into a shared page 333 that is shared with each of the plurality of participants after the remote conference and a non-shared page 334 that is not shared with each of the plurality of participants after the remote conference.

Further, for example, the shared pages 333 are classified into a shared portion 335 that is shared with each of the plurality of participants after the remote conference and a non-shared portion 336 that is not shared with each of the plurality of participants after the remote conference.

The sharing result output unit 207 shown in Fig. 5 outputs the shared file to each of a plurality of user terminals 10. Specifically, the sharing result output unit 207 specifies the shared file, and outputs the shared file to each of the plurality of user terminals 10 via the communication unit 13 in a case in which a condition related to the sharing is satisfied.

Examples of the condition related to the sharing include that the setting related to the shared file is completed for the candidates for the shared file. Specifically, examples of the condition related to the sharing include that all of the plurality of participants have completed the setting related to the shared file for the candidates for the shared file. Here, the "setting related to the shared file" is, for example, to designate and set the shared file, the shared page, or the shared portion. It should be noted that, as the setting related to the shared file, the non-shared file, the non-shared page, and the non-shared portion may be designated and set, or a sharing destination may be designated and set.

In addition, examples of the condition related to the sharing include that an instruction to share the shared file with each of the plurality of participants is received. Specifically, examples of the condition related to the sharing include that a button for receiving the instruction to share the shared file with each of the plurality of participants from the participant is selected by a convener, a person in charge, or the participant of the remote conference.

It should be noted that, as the condition related to the sharing, only one condition may be prepared, or two or more conditions may be prepared.

In addition, the sharing result output unit 207 gives notification of the setting related to the shared file for the file included in the candidates for the shared file specified by the sharing candidate output unit 206 before outputting the shared file to each of the plurality of user terminals 10. Specifically, the sharing result output unit 207 determines whether or not a condition related to the notification is satisfied before outputting the shared file to each of the plurality of user terminals 10. In a case in which the condition related to the notification is satisfied, the sharing result output unit 207 gives the notification of the setting related to the shared file to another participant different from the participant who uses the usage file included in the candidates for the shared file in the remote conference. It should be noted that the notification of the setting related to the shared file may be given to the other participant via the user terminal 10 by using a picture, sound, light, or the like, or may be given to the other participant by transmitting an e-mail or the like.

Examples of the condition related to the notification include that predetermined time has elapsed since the finish of the remote conference, but the setting related to the shared file is not completed for the candidates for the shared file. Specifically, examples of the condition related to the notification include that the setting related to the shared file is not completed for the usage file included in the candidates for the shared file by the due date by the participant who uses the usage file in the remote conference.

In addition, examples of the condition related to the notification include that authority to make the setting related to the shared file is assigned to the other participant to which the notification is given. Examples of the other participant to which the authority to make the setting related to the shared file is assigned include the participant whose user information is related to the user information of the participant who uses the usage file, in addition to an organizer, an administrator, and a person in charge of the remote conference.

In addition, examples of the condition related to the notification include that authority to perform an operation of editing or the like on the usage file included in the candidates for the shared file is assigned in advance to the other participant to which the notification is given. Examples of the other participant to which the authority to perform the operation of editing or the like include the participant whose user information is related to the user information of the participant who uses the usage file, in addition to the creator of the file.

It should be noted that, as the condition related to the notification, only one condition may be prepared, or two or more conditions may be prepared. The condition related to the notification is an example of a predetermined condition.

The file DB 208 stores and accumulates the information, such as the image data corresponding to the contents of the file acquired by the file acquisition unit 201.

The conference DB 209 stores the information related to the remote conference. Specifically, the conference DB 209 stores and accumulates the conference information acquired by the conference information acquisition unit 203, the user information of the participant of the remote conference acquired by the participant information acquisition unit 204, and the usage information acquired by the usage information acquisition unit 205 in association with each other.

The user DB 210 stores the user information related to the user who uses the file management service. Specifically, the user DB 210 stores and accumulates the user information for specifying the user using the file management service. The user information includes, for example, information, such as a user name, a password, biometric information, affiliation, and the assigned authority.

### [Functional Configuration of Remote Conference Server 30]

In response to the request from the user terminal 10, the remote conference server 30 executes processing of starting and finishing the remote conference, sharing the image displayed on the display unit 15 of the user terminal 10 in the remote conference, and the like. In addition, the remote conference server 30 may provide various types of information, such as information related to the remote conference itself or information for specifying the participant of the remote conference, to the file management server 20.

In the present exemplary embodiment, the secondary storage unit 12 stores the information or the like related to the remote conference, and the communication unit 13 receives the request or the like from other apparatuses or transmits the requested information or the like related to the remote conference.

### [Processing of Sharing Shared File]

A processing example in a case in which the shared file including the usage file is output to each of the plurality of user terminals 10 after the remote conference is finished will be described.

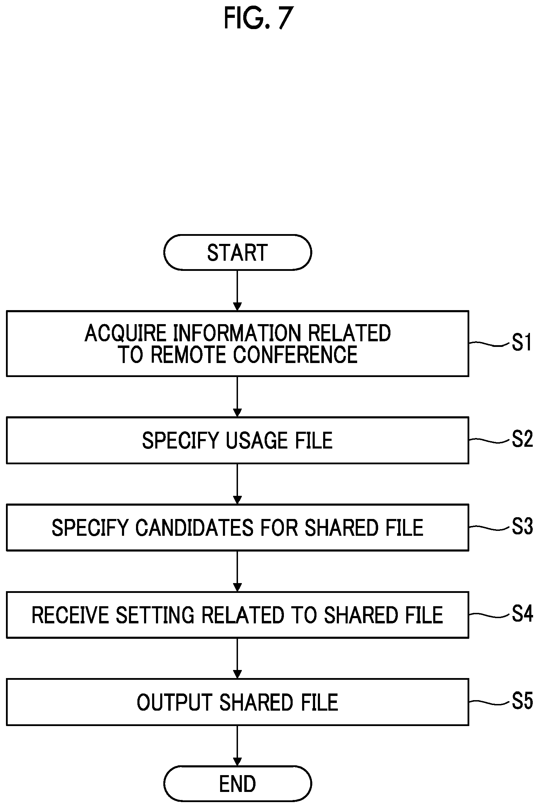

Fig. 7 is a flowchart showing a flow of processing in which the file management server 20 according to the present exemplary embodiment shares the shared file.

Fig. 7 shows a case in which the candidates for the shared file specified by the file management server 20 is presented to the participant via the user terminal 10.

First, the file management server 20 acquires the information related to the remote conference (S 1). Specifically, the conference information acquisition unit 203 acquires the conference information including the conference time information indicating the time at which the remote conference is conducted, as the information related to the remote conference. In addition, the participant information acquisition unit 204 acquires the user information of the participant of the remote conference as the information related to the remote conference. In addition, the usage information acquisition unit 205 acquires the usage information of the file that is used in the remote conference as the information related to the remote conference.

In this processing example, a case will be assumed in which the file management server 20 acquires the information related to the remote conference based on the operation of the user on an operation screen 500 (refer to Fig. 4B) for providing the file management service. Specifically, the file management server 20 acquires the conference information or the participant information from the user terminal 10 for the remote conference conducted while using the file management service.

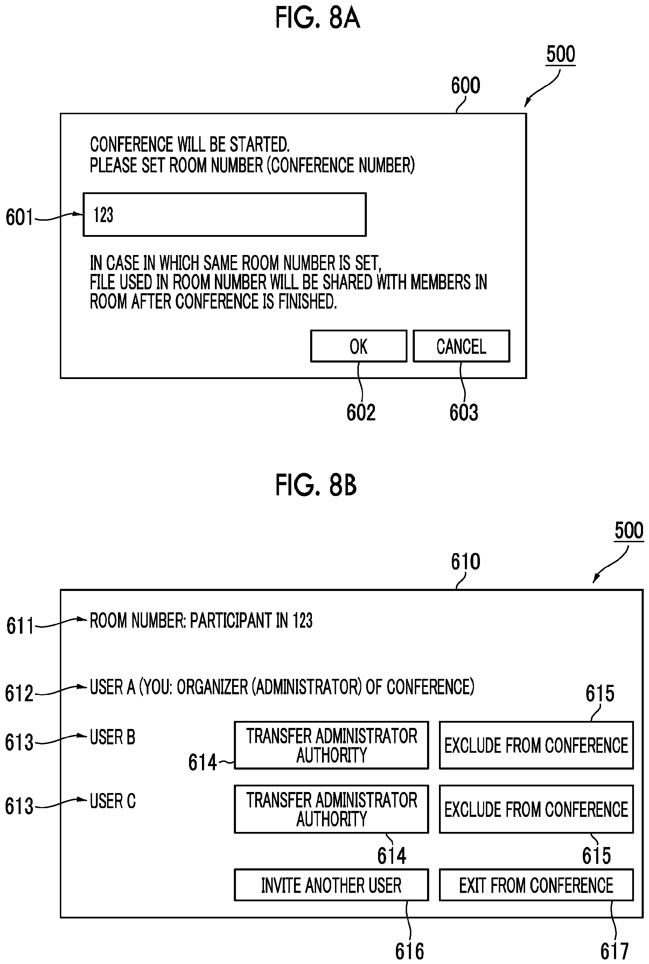

Here, regarding the remote conference conducted while using the file management service, the screen displayed on the display unit 15 of the user terminal 10 of the participant will be described with reference to Figs. 8A to 10.

Figs. 8A and 8B are diagrams showing another example of the display of the operation screen 500 to which the present exemplary embodiment is applied, in which Fig. 8A shows an example of a screen that receives input of the conference information of the remote conference, and Fig. 8B shows an example of a screen that receives input of the participant information of the remote conference.

In a case of the present exemplary embodiment, in a case in which the conference start button 553 (refer to Fig. 4B) is selected, as shown in Fig. 8A, a start screen 600 that receives input of information related to the start of the remote conference is displayed on the operation screen 500.

In the display example shown in Fig. 8A, the start screen 600 includes an input field 601 for receiving the input of the information used for specifying the remote conference, an acceptance button 602 for receiving an instruction to accept the sharing of the usage file that is used in the remote conference, and an input cancel button 603 for receiving an instruction to execute processing of canceling the input of the information related to the start of the remote conference.

The input field 601 receives input of information for associating the users who conduct the remote conference with each other among the users who use the file management service. Specifically, the input field 601 receives input of a keyword determined in the file management service.

For example, a character string or the like input by the participant who first selects the acceptance button 602 among the participants of the remote conference may be used as the keyword determined in the file management service. In addition, for example, a character string assigned in a case in which the remote conference is reserved in the file management service by the file management server 20 may be used as the keyword determined in the file management service.

In the display example shown in Fig. 8A, the input field 601 receives input of a room number as the keyword determined in the file management service. Here, the "room number" corresponds to a conference number for specifying the remote conference, that is, a conference room number of a virtual conference room in which the participants of the remote conference gather.

In a case of the present exemplary embodiment, the keyword determined in the file management service is checked among the users who participate in the remote conference. For example, one user who knows the keyword determined in the file management service transmits the keyword to another user who does not know the keyword. In addition, the file management server 20 may notify the user included in candidates for the participant of the remote conference of the keyword determined in the file management service.

The acceptance button 602 receives the acceptance to share the usage file that is used in the remote conference with the other user whose room number input to the input field 601 is matched among the users who use the file management service.

In the present exemplary embodiment, in a case in which the user inputs the room number to the input field 601 and selects the acceptance button 602, the user is specified as the participant participating in the remote conference specified by the room number.

The input cancel button 603 receives the cancel of the execution of the processing of sharing the usage file that is used in the remote conference with the other user whose room number input to the input field 601 is matched among the users who use the file management service.

In the present exemplary embodiment, in a case in which the input cancel button 603 is selected, the display of the start screen 600 is removed and the start screen 600 is hidden.

In addition, in a case of the present exemplary embodiment, in a case in which the acceptance button 602 is selected, as shown in Fig. 8B, a participant information screen 610 that receives input of information related to the participant of the remote conference is displayed on the operation screen 500. In Fig. 8B, the participant information screen 610 displayed on the user terminal 10 of the user A who is the organizer and the administrator of the remote conference is shown as an example.

The participant information screen 610 includes a conference name field 611 in which information corresponding to a conference name of the remote conference in which the user participates is displayed, an authority field 612 in which information related to the authority of the participant is displayed, and a participant name field 613 in which information corresponding to a participant name for the other participant of the remote conference is displayed. In addition, on the participant information screen 610, a transfer button 614 for receiving an instruction to transfer the authority (hereinafter, referred to as "administrator authority") of the administrator of the remote conference and an exclusion button 615 for receiving an instruction to exclude the other participant from the remote conference are displayed. In addition, on the participant information screen 610, an invitation button 616 for receiving an instruction to invite the other user who does not participate in the remote conference and an exit button 617 for receiving an instruction to exit from the remote conference in which the user participates are displayed.

The conference name field 611 is an area in which the information used for specifying the remote conference in which the user participates is displayed. In the example shown in Fig. 8B, "123" input to the input field 601 (refer to Fig. 8A) is displayed as the room number associated with the remote conference in which the user participates.

The authority field 612 is an area in which information related to the authority assigned to the participant who performs an operation on the participant information screen 610 is displayed. Fig. 8B displays that the administrator authority is assigned to the user A who performs the operation on the participant information screen 610.

The participant name field 613 is an area in which information used for specifying the other participant of the remote conference in which the participant participates is displayed. Fig. 8B shows that the user name of each of the user B and the user C included in the user information held by the file management server 20 is displayed, and other participants of the remote conference in which the user A participates are the user B and the user C.

In the example shown in Fig. 8B, the transfer button 614 and the exclusion button 615 are displayed in association with each participant name field 613. In a case in which one transfer button 614 is selected, the administrator authority is transferred to the other participant displayed in the participant name field 613 corresponding to the one transfer button 614. In addition, in a case in which one exclusion button 615 is selected, the other participant displayed in the participant name field 613 corresponding to the one exclusion button 615 is exited from the remote conference.

In addition, in the example shown in Fig. 8B, in a case in which the invitation button 616 is selected, the other user is invited to the remote conference in which the user A participates. Specifically, for example, in a case in which the invitation button 616 is selected, the other user is notified that the user A is invited to the remote conference in which the user A participates.

In addition, in a case in which the exit button 617 is selected, the user A is exited from the remote conference. Specifically, for example, in a case in which the exit button 617 is selected, the user A is exited from the remote conference, and the display of the participant information screen 610 is removed.

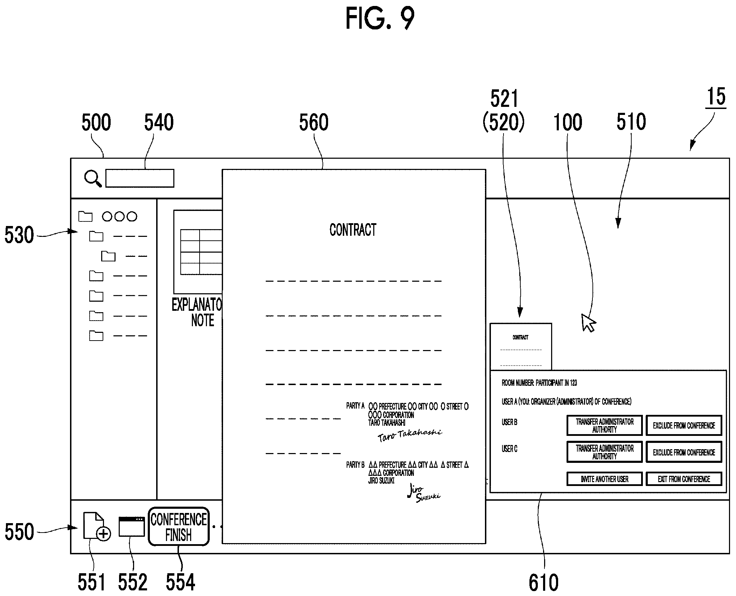

Fig. 9 is a diagram showing another example of the display of the display unit 15 of the user terminal 10 according to the present exemplary embodiment, and shows an example of a screen for displaying the display of the display unit 15 in synchronization on the display unit 15 of another user terminal 10. Here, in Fig. 9, the operation screen 500 displayed on the user terminal 10 of the user A who is the organizer and the administrator of the remote conference is shown as an example.

In the example shown in Fig. 9, the toolbar 550 including a conference finish button 554 for receiving an instruction to execute processing of recording finish time of the remote conference is displayed.

In a case of the present exemplary embodiment, in a case in which the acceptance button 602 shown in Fig. 8A is selected, the participant information screen 610 is displayed on the operation screen 500 instead of the start screen 600 (refer to Fig. 8A). It should be noted that the display mode, such as the display size or the display position, of the participant information screen 610 is not limited to the example of Fig. 9, and may be changed by the user.

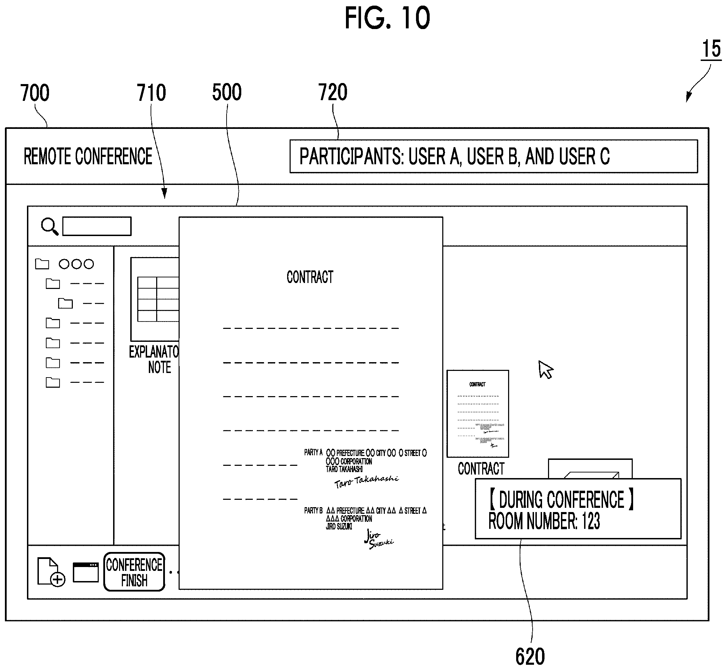

Fig. 10 is a diagram showing still another example of the display of the display unit 15 of the user terminal 10 according to the present exemplary embodiment, and shows an example of a screen for displaying the display of the display unit 15 of the other user terminal 10 in synchronization. Here, in Fig. 10, a screen displayed on the user terminal 10 of the user B or the user C who is the participant of the remote conference is shown as an example.

In the display example shown in Fig. 10, a screen in a case of using the remote conference service is displayed on the display unit 15 of the user terminal 10 according to the present exemplary embodiment. Specifically, the display unit 15 displays a remote conference screen 700 that provides the remote conference service and includes a synchronization space 710 in which the display of the display unit 15 of the other user terminal 10 is displayed in synchronization, and a conference information field 720 in which information related to the remote conference, such as the participant, is displayed.

The synchronization space 710 is an area in which the operation screen 500 of the other user is displayed in synchronization, as the display of the display unit 15 of the other user terminal 10.

In the example shown in Fig. 10, the operation screen 500 of the user A is displayed in synchronization, as the display of the display unit 15 of the other user terminal 10. On the operation screen 500 of the user A displayed in synchronization, a conference information screen 620 is displayed instead of the participant information screen 610 (refer to Fig. 9).

On the conference information screen 620, as the keyword determined in the file management service for associating the users who conduct the remote conference with each other, for example, the room number associated with the remote conference in which the user A participates is displayed.

It should be noted that, as the display of the display unit 15 of the other user terminal 10, the operation screen 500 of the user A shown in Fig. 9 may be displayed without change.

In a case of the present exemplary embodiment, the file management service can be used in a state in which the remote conference screen 700 is displayed. Specifically, for example, the user can use the file saved in the file management server 20 by using the file management service while referring to the display of the display unit 15 of the other user terminal 10 on the remote conference screen 700.

Then, the file management server 20 specifies the usage file (S2). Specifically, the sharing candidate output unit 206 specifies the usage file that is used in the remote conference from among the files that can be used in the file management service based on the usage information acquired by the usage information acquisition unit 205.

Here, the usage information acquired by the usage information acquisition unit 205 will be described.

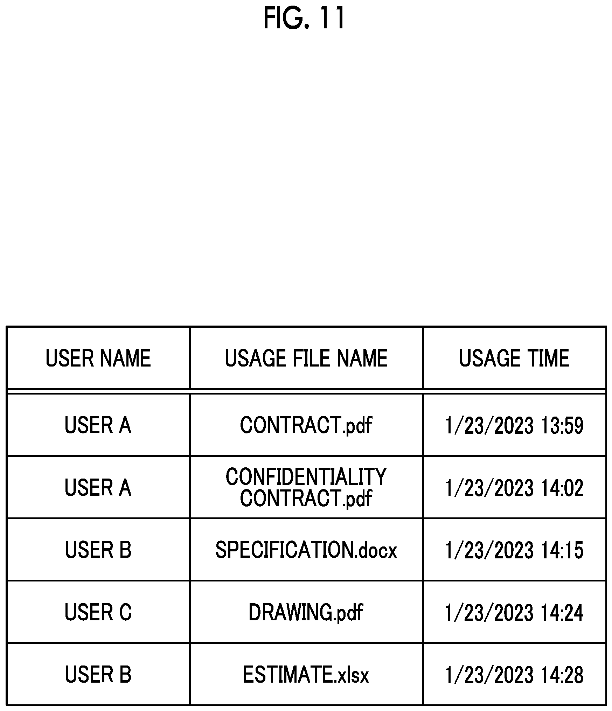

Fig. 11 is a diagram showing an example of the usage information.

Fig. 11 shows a case in which the user A, the user B, and the user C use the file saved in the file management server 20 by using the file management service in the remote conference.

In a case of the present exemplary embodiment, the usage information is information in which the "user name" indicating the user who uses the file in the remote conference, a "usage file name" indicating the file used by the user, and a "usage time" indicating the time at which the user uses the file are associated with each other.

In the "user name", the user name of the participant who uses the file included in the user information held by the file management server 20 is reflected as the information for specifying the participant who uses the file in the remote conference from among the participants of the remote conference. In the "usage file name", the file name associated with the file that is used is reflected as the identification information of the file that is used in the remote conference. In the "usage time", the time at which the file is used is reflected as the information indicating the usage status of the file in the remote conference.

The example shown in Fig. 11 shows that the user A uses the file "contract" at 13:59 on January 23, 2023, and uses the file "confidentiality contract" at 14:02 on January 23, 2023. In addition, the example shown in Fig. 11 shows that the user B uses the file "specification" at 14:15 on January 23, 2023, and uses the file "estimate" at 14:28 on January 23, 2023. Also, the example shown in Fig. 11 shows that the user C uses the file "drawing" at 14:24 on January 23, 2023.

Then, the file management server 20 specifies the candidates for the shared file (S3). Specifically, the sharing candidate output unit 206 specifies the candidates for the shared file including at least the usage file. Then, the sharing candidate output unit 206 presents the information related to the specified candidates for the shared file to each of the participants of the remote conference.

In this processing example, the information related to the candidates for the shared file specified by the file management server 20 is presented to the user terminal 10 of the participant of the remote conference.

Here, the information related to the candidates for the shared file presented to the user terminal 10 of the participant of the remote conference will be described.

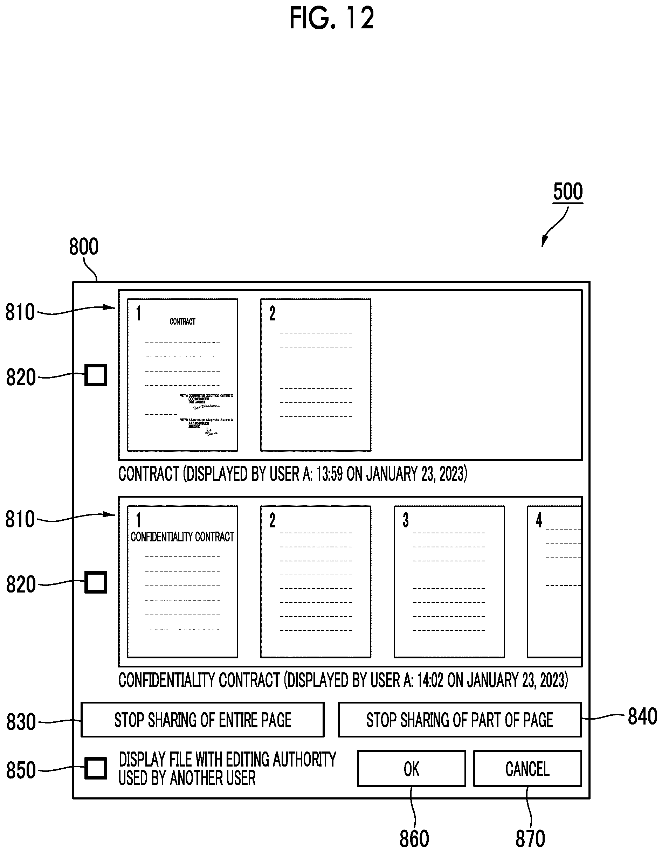

Fig. 12 is a diagram showing an example of the display of the operation screen 500 to which the present exemplary embodiment is applied, and shows an example of a screen for presenting the candidates for the shared file.

In Fig. 12, the operation screen 500 displayed on the user terminal 10 of the user A is shown as an example.

In the example shown in Fig. 12, a presentation screen 800 that presents the candidates for the shared file is displayed on the operation screen 500. The presentation screen 800 includes a candidate display field 810 for displaying the usage file included in the candidates for the shared file, and a collective designation button 820 for collectively receiving the designation of the pages of the file included in the candidates for the shared file. In addition, the presentation screen 800 includes a page stop button 830 for receiving an instruction to stop the sharing of the entire designated page, and a partial stop button 840 for receiving an instruction to stop the sharing of a part of the designated page. In addition, the presentation screen 800 includes an additional display button 850 for receiving an instruction to additionally display the usage file of the other user who is the other participant included in the candidates for the shared file, a completion button 860 for receiving an instruction to complete the setting related to the shared file, and a setting cancel button 870 for receiving an instruction to execute processing of canceling the setting related to the shared file.

In the candidate display field 810, information related to the usage file that is used by the user while participating in the remote conference is displayed. Specifically, in the candidate display field 810, an image corresponding to the page of the usage file that is used by the user while participating in the remote conference is displayed.

Each image corresponding to the page receives the selection of the corresponding page. The image corresponding to the page is, for example, an image in which the image represented by the image data of the page is reduced, and is displayed in association with the number of pages in the usage file.

In addition, in addition to the image corresponding to the page, the file name of the usage file, the user name of the user who uses the usage file, the time at which the usage file is used, or the like may be displayed in association with each other.

In a case of the present exemplary embodiment, the user makes the setting related to the shared file for the candidates for the shared file via the user terminal 10. For example, the user makes the setting related to the shared file for each usage file, for each page of the usage file, or for each portion in each page of the usage file.

Then, the file management server 20 receives the setting related to the shared file (S4). Specifically, the sharing result output unit 207 receives the setting related to the shared file based on the request information acquired by the request information acquisition unit 202.

Then, the file management server 20 outputs the shared file (S5), and finishes the processing. Specifically, the sharing result output unit 207 specifies the shared file based on the setting related to the shared file, outputs the shared file to each of the plurality of user terminals 10, and finishes the processing.

Here, the display mode of the shared file shared with each of the plurality of participants of the remote conference will be described.

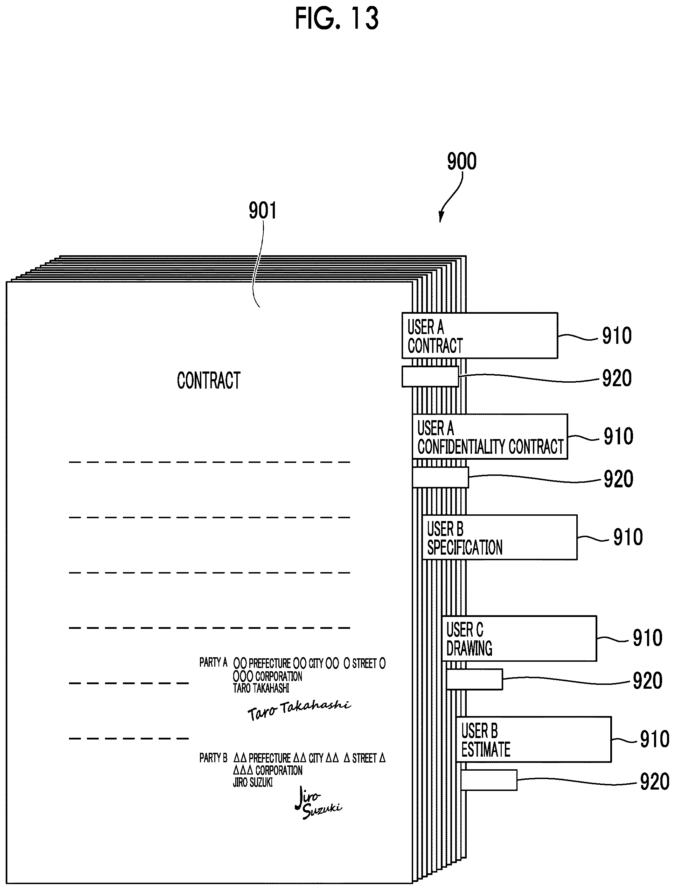

Fig. 13 is a diagram showing an example of a shared file 900 to which the present exemplary embodiment is applied.

In the example shown in Fig. 13, a page image 901 corresponding to the page of the file is included in the shared file 900 in which a plurality of files including at least the usage file are bundled as one file. In addition, the shared file 900 includes an identification image 910 for identifying each file and a notification image 920 for giving the notification of the used page.

In the shared file 900, the plurality of files are bundled as one file according to each usage status of the file. Stated another way, in the shared file 900, the plurality of files are arranged based on the usage status, and are bundled as one file. In the example of Fig. 13, the plurality of files are arranged based on the usage time of each file, and are bundled as one file.

The page image 901 is an image corresponding to a page included in the shared file 900. In the example of Fig. 13, an image corresponding to a first page of the usage file "contract" of the user A is displayed as the page image 901.

The identification image 910 is displayed in association with the first page of each usage file. Stated another way, the identification image 910 is displayed in correspondence with each of the usage files included in the shared file 900. The attribute information indicating the attribute of the corresponding usage file is displayed on the identification image 910.

In the example shown in Fig. 13, the identification image 910 including the user name of the participant who uses the corresponding usage file in the remote conference or the user name of the user who makes the setting related to the shared file for the corresponding usage file together with the file name of the corresponding usage file, as the attribute information, is displayed.

In addition, in a case in which the identification image 910 is selected, the first page of the corresponding usage file may be displayed.

The notification image 920 is displayed in association with the page that is used in the remote conference. The notification image 920 is not displayed for a page that is not used in the remote conference in the file included in the shared file 900. In the file included in the shared file 900, the page that is used during the remote conference and the page that is not used during the remote conference have different display modes depending on the presence or absence of the notification image 920.

In addition, in a case in which the notification image 920 is selected, the corresponding page may be displayed.

### [Stop Sharing of Entire Page Included in Shared File]

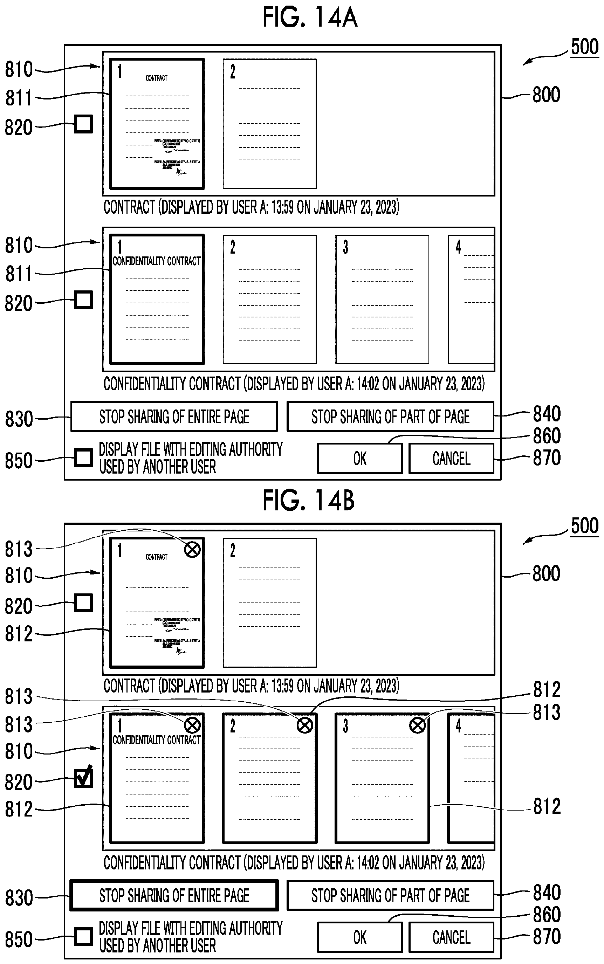

Figs. 14A and 14B are diagrams showing still another example of the display of the operation screen 500 to which the present exemplary embodiment is applied, in which Fig. 14A shows a state in which the page of the usage file is designated, and Fig. 14B shows a state in which the page stop button 830 is selected.

In Figs. 14A and 14B, the operation screen 500 displayed on the user terminal 10 of the user A is shown as an example.

In a case in which the page of the usage file is designated by the user, an image 811 of a frame that surrounds the image corresponding to each page is displayed as shown in Fig. 14A. For example, in a case in which the image corresponding to the first page of the file "contract" and the image corresponding to the first page of the file "confidentiality contract" are selected by the user, the image 811 is displayed for the image corresponding to each page.

The image 811 is an image indicating that the selection of the image corresponding to the page is received. The image 811 is configured by, for example, a frame line indicating an outline of the image corresponding to the page in which the selection is received.

In addition, in a case in which the page of the usage file is designated by the user in a state in which the page stop button 830 is selected, as shown in Fig. 14B, an image 812 of the frame that surrounds the image corresponding to each page, and a badge 813 for giving the notification that the sharing of each page is stopped are displayed. For example, after the page stop button 830 is selected, the image corresponding to the first page of the file "contract" and the collective designation button 820 of the file "confidentiality contract" may be selected by the user. In this case, the image 812 and the badge 813 are displayed for all of the image corresponding to the first page of the file "contract" and the image corresponding to the page of the file "confidentiality contract".

The image 812 is an image indicating that the selection of the image corresponding to the page in which the sharing is stopped is received. The image 812 is configured by, for example, a frame line indicating an outline of the image corresponding to the page in which the selection is received.

The badge 813 is an image for giving the notification that the sharing of the selected page is stopped, in an emphasized manner.

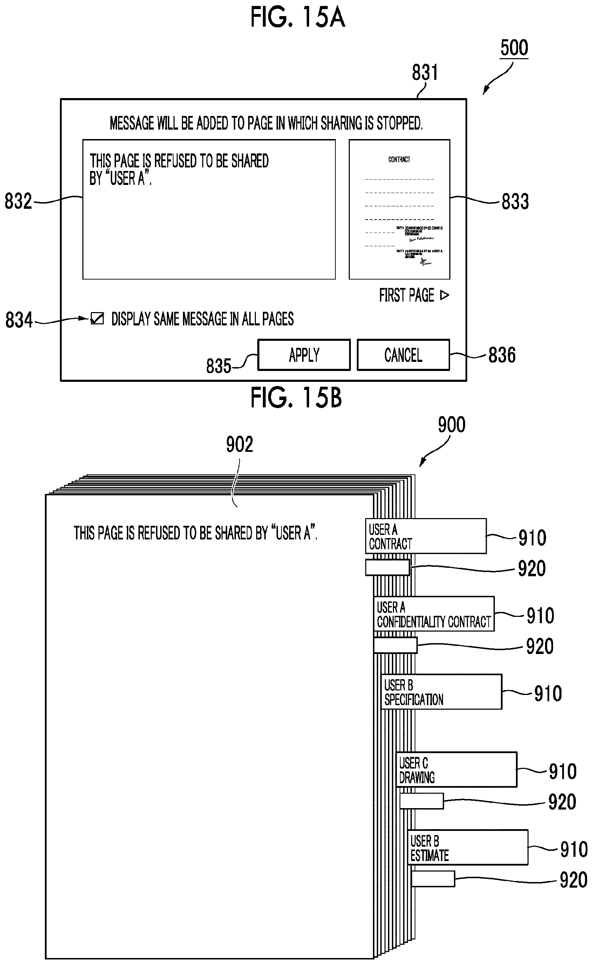

Figs. 15A and 15B are diagrams for describing processing of stopping sharing of the entire designated page, in which Fig. 15A shows an example of a screen that receives a setting related to the stop of the sharing of the entire page, and Fig. 15B shows an example of the shared file 900 in which the sharing of the entire page is stopped.

Figs. 15A and 15B shows a case in which the sharing of the entire page is stopped for the first page of the usage file "contract" of the user A.

In a case of the present exemplary embodiment, in a case in which the completion button 860 is selected in the state shown in Fig. 14B, as shown in Fig. 15A, a page setting screen 831 that receives the setting related to the stop of the sharing of the entire page is displayed on the operation screen 500.

In the example shown in Fig. 15A, the page setting screen 831 includes a message input field 832 for receiving input of a text message and a page display field 833 in which the image corresponding to the page reflecting the message input to the message input field 832 is displayed. In addition, the page setting screen 831 includes a collective reflection button 834 for collectively receiving the reflection of the text message input to the message input field 832. In addition, the page setting screen 831 includes an apply button 835 for receiving an instruction to apply the setting related to the stop of the sharing of the entire page, and an application cancel button 836 for receiving an instruction to execute processing of canceling the application for the setting related to the stop of the sharing of the entire page.

The message input field 832 receives the input of the text message displayed instead of the image data of the designated page.

In the page display field 833, for example, the image corresponding to the page of the usage file designated in Fig. 14B is displayed. In a case in which the image displayed in the page display field 833 is switched, the display of the message input field 832 is also switched such that the text message displayed instead of the image data of the page corresponding to the image in the page display field 833 is displayed in the shared file 900 (refer to Fig. 13).

In a case in which the collective reflection button 834 is selected, the setting is reflected such that the text message displayed in the message input field 832 is displayed instead of the image data of each page for all the designated pages.

In a case in which the apply button 835 is selected, in a case of sharing the shared file, the setting for sharing the text message displayed in the message input field 832 instead of the image data of each page is applied.

In addition, in a case in which the application cancel button 836 is selected, the application of the setting related to the stop of the sharing of the entire page is canceled. Specifically, for example, in a case in which the application cancel button 836 is selected, the application of the setting for sharing the text message instead of the image data is canceled, and the display of the page setting screen 831 is removed.

In a case of the present exemplary embodiment, in a case in which the apply button 835 is selected in the state shown in Fig. 15A, as shown in Fig. 15B, the shared file 900 in which the text message is displayed instead of the image data for the page in which the sharing of the entire page is stopped is shared with each of the plurality of participants. Stated another way, even in a case in which the file is the file to be shared, the contents of the page designated not to be shared is not shared with each of the plurality of participants.

In the example shown in Fig. 15B, a page image 902 corresponding to the page in which the sharing of the entire page is stopped is displayed.

The page image 902 is an image that displays the text message set on the page setting screen 831 (refer to Fig. 15A) instead of the image corresponding to the page included in the shared file 900. In the example of Figs. 15A and 15B, as the page image 902, the text message "This page is refused to be shared by "user A"." is displayed instead of the image data of the page for the first page of the usage file "contract" of the user A.

### [Stop Sharing of Part of Page Included in Shared File]

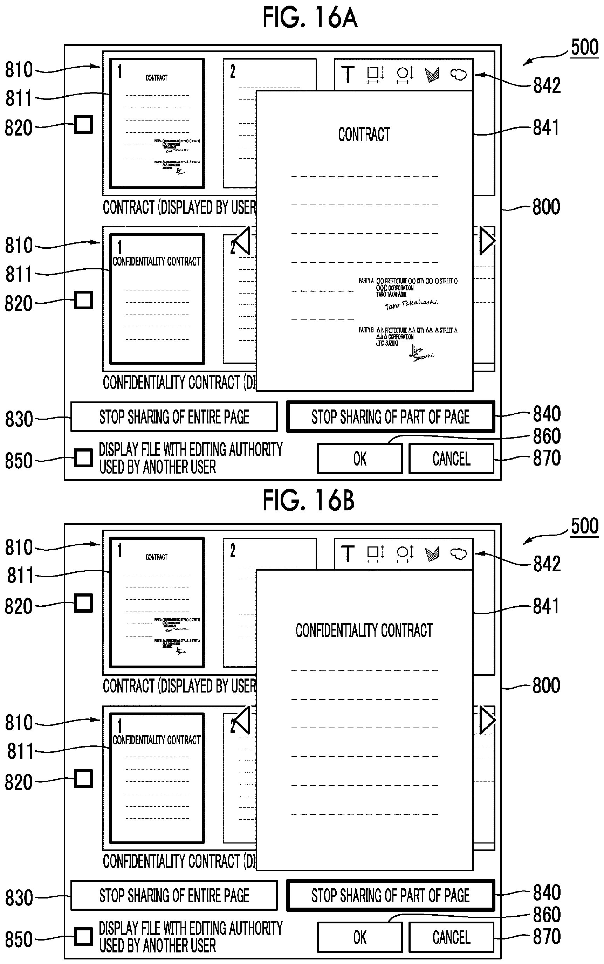

Figs. 16A and 16B are diagrams for describing processing of stopping sharing of a part of the designated page, in which Fig. 16A shows an example of a screen that receives a setting related to the stop of the sharing of a part of the first page of the file "contract", and Fig. 16B shows an example of a screen that receives a setting related to the stop of the sharing of a part of the first page of the file "confidentiality contract".

Figs. 16A and 16B shows a case in which the sharing of the part of the page is stopped for the first page of the usage file "contract" of the user A and the first page of the file "confidentiality contract".

In a case of the present exemplary embodiment, in a case in which the partial stop button 840 is selected in the state shown in Fig. 14A, as shown in Fig. 16A, a portion setting screen 841 that receives a setting related to the stop of the sharing of a portion of the part of the page is displayed on the operation screen 500.

In the example shown in Fig. 16A, an image corresponding to the contents of the page that receives the designation of the portion in which the sharing is stopped is displayed on the portion setting screen 841. In addition, a menu bar 842 for receiving an instruction of the user on the page displayed on the portion setting screen 841 is displayed in association with the portion setting screen 841.

The image corresponding to the contents of the page of the usage file designated by the user is displayed on the portion setting screen 841 without activating a new program. Here, the portion setting screen 841 is displayed to be enlarged in a size such that the user can understand the contents of the page. An image of the portion setting screen 841 is generally displayed larger than an image to which the corresponding image 811 is given. In addition, there is a mode in which a resolution of the image of the portion setting screen 841 is higher than a resolution of a thumbnail image displayed as the image to which the image 811 is given.

The menu bar 842 is an area for receiving an operation of the user on the page, and a button image for receiving execution of editing of the page is displayed. Examples of the editing of the page includes adding an image that covers the portion of the part of the page.

The image that covers the portion of the part of the page is added to the portion designated by the user to stop the sharing. The portion designated by the user to stop the sharing may be a portion of the page corresponding to the area of the portion setting screen 841 designated by the user, or may be a portion designated by the user in which the character, the symbol or the like is displayed.

The shape of the image that covers the portion of the part of the page may be the shape registered in advance, such as a circle, an ellipse, a square, or a rectangle, or may be the shape created by the user. In addition, a display size of the image that covers the portion of the part of the page may be changed based on an instruction of the user.

In addition, in a case of the present exemplary embodiment, in a case in which a button image (not shown) for receiving a change of the displayed page is selected in the state shown in Fig. 16A, as shown in Fig. 16B, the display of the portion setting screen 841 is switched. Specifically, the display of the portion setting screen 841 is switched, for example, from the designated page of the usage file "contract" of the user A to the designated page of the usage file "confidentiality contract" of the user A.

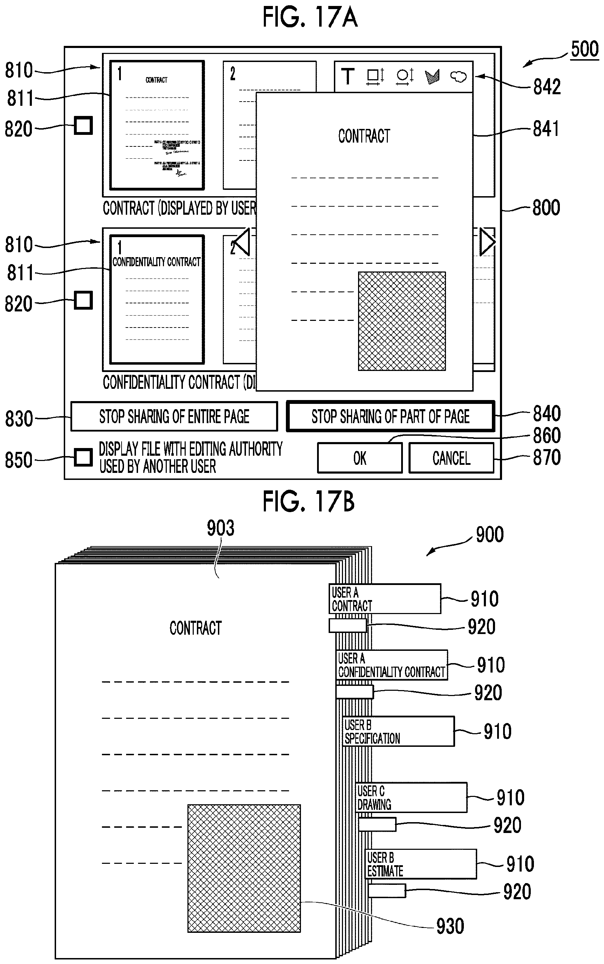

Figs. 17A and 17B are diagram for describing processing of stopping the sharing of a part of a selected page, in which Fig. 17A is a diagram showing a screen that receives a setting related to the stop of the sharing of the part of the first page of the file "contract", and Fig. 17B is a diagram showing the shared file 900 in which the sharing of the part of the page is stopped.

Figs. 17A and 17B shows a case in which the sharing of the part of the page is stopped for the first page of the usage file "contract" of the user A.

In a case of the present exemplary embodiment, in a case in which the image that covers the portion of the part of the page is added in the state shown in Fig. 16A, as shown in Fig. 17A, the portion setting screen 841 that receives the setting related to the stop of the sharing of the part of the page is displayed on the operation screen 500.

In the example shown in Fig. 17A, on the portion setting screen 841, the image is additionally displayed in the portion designated by the user to stop the sharing, and the portion of the part of the page is hidden. Specifically, on the portion setting screen 841, a preview of the image corresponding to the page on which processing of hiding the contents of the portion designated by the user to stop the sharing is executed is displayed.

In a case of the present exemplary embodiment, in a case in which the completion button 860 is selected in the state shown in Fig. 17A, as shown in Fig. 17B, for the page in which the sharing of the part of the page is stopped, the shared file 900 in which the contents of the part of the page is hidden is shared with each of the plurality of participants. Stated another way, even in a case in which the file is the file to be shared, the contents of the part of the page designated not to be shared is not shared with each of the plurality of participants.

In the example shown in Fig. 17B, a page image 903 corresponding to the page in which the sharing of the part of the page is stopped is displayed.

The page image 903 is an image in which the contents of the portion set on the portion setting screen 841 (refer to Fig. 17A) is hidden from the image corresponding to the page included in the shared file 900. In the example of Figs. 17A and 17B, as the page image 903, for the first page of the usage file "contract" of the user A, the image that covers the portion of the part of the page is displayed, and information related to a contractor is hidden.

### [Presentation of Usage File of Other Participant Included in Candidates for Shared File]

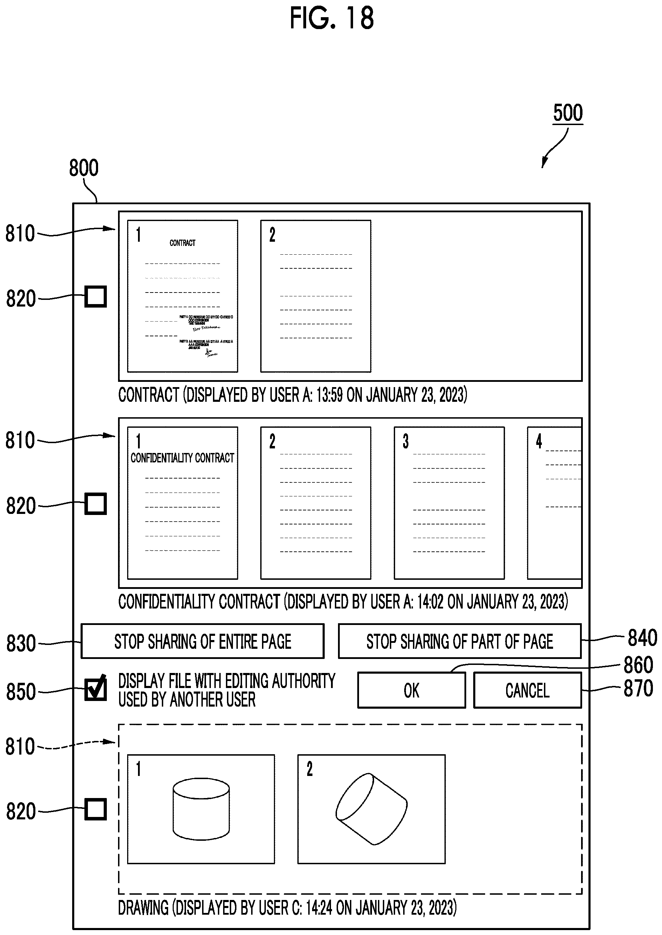

Fig. 18 is a diagram showing another example of the display of the operation screen 500 to which the present exemplary embodiment is applied, and shows an example of the screen for presenting the candidates for the shared file.

Fig. 18 shows a case in which the user A has the authority to make the setting related to the shared file for the usage file of the user C who is the other user.

In a case of the present exemplary embodiment, in a case in which the additional display button 850 is selected in the state shown in Fig. 12, as shown in Fig. 18, the candidate display field 810 for the usage file that is used by the other user and is included in the candidates for the shared file is provided. In the candidate display field 810, among the usage files of the other user included in the candidates for the shared file, the usage file of the other user who has the authority to make the setting related to the shared file is displayed. In the example shown in Fig. 18, the usage file of the other user who has the authority to perform the operation of editing or the like as the authority to make the setting related to the shared file is displayed. In addition, the setting related to the shared file is also received for the usage file of the other user displayed in the candidate display field 810.

In the example shown in Fig. 18, the usage file "drawing" of the user C in the remote conference is presented, as the candidates for the shared file, to the user A who has the authority to make the setting related to the shared file for the file that is used by the user C. As a result, it is intended that the setting related to the shared file is made by the user A for the file "drawing" that is the usage file of the user C.

### [Sharing of Related File]

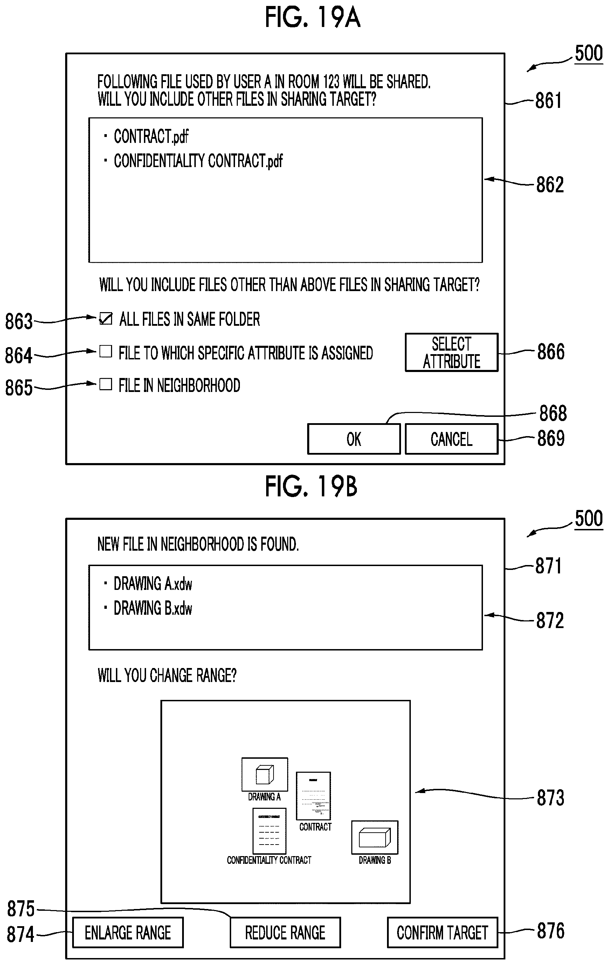

Figs. 19A and 19B are diagrams for describing processing of sharing the related file that is related to the usage file, in which Fig. 19A shows an example of a screen that receives a setting related to specifying of the related file, and Fig. 19B shows an example of a screen for checking the related file included in the shared file.

Figs. 19A and 19B shows a case in which the related files that are related to the usage files "contract" and "confidentiality contract" of the user A are shared.

In a case of the present exemplary embodiment, in a case in which the completion button 860 (refer to Fig. 12) is selected in a state in which the setting related to the shared file is made for the usage file, as shown in Fig. 19A, a related file setting screen 861 that receives the setting related to the specifying of the related file is displayed on the operation screen 500.

In the example shown in Fig. 19A, the related file setting screen 861 includes a sharing display field 862 for displaying the usage file included in the shared file, and relation degree buttons 863, 864, and 865 for receiving a setting of the relation degree between the non-usage file specified as the related file and the usage file displayed in the sharing display field 862. In addition, the related file setting screen 861 includes a finish button 868 for receiving an instruction to finish the setting related to the specifying of the related file, and a specifying cancel button 869 for receiving an instruction to execute processing of canceling the specifying of the related file.

The sharing display field 862 is an area in which information used for specifying the usage file included in the shared file is displayed. In the sharing display field 862, for example, the file name of the usage file included in the shared file is displayed.

Each of the relation degree buttons 863, 864, and 865 is provided for each relation degree between the non-usage file specified as the related file and the usage file displayed in the sharing display field 862. In the example shown in Fig. 19A, the relation degree button 863 among the relation degree buttons 863, 864, and 865 is selected by the user.

The relation degree button 863 receives a setting for specifying the non-usage file in the folder in which the usage file displayed in the sharing display field 862 is saved as the related file.

In a case in which the relation degree button 863 is selected, the specifying of the related file is performed by using the inside of the folder in which the usage file is saved as a search range.

The relation degree button 864 receives a setting for specifying the non-usage file to which a specific attribute is assigned as the related file. An attribute selection button 866 for receiving an instruction to display a screen that receives the selection of one or a plurality of types of attribute information as the specific attribute and shows the attribute information that can be designated by the user may be provided.

In a case in which the relation degree button 864 is selected, the non-usage file in which the attribute information that matches or is similar to the attribute information designated by the user is assigned is specified as the related file.

The relation degree button 865 receives the setting for specifying, as the related file, the non-usage file corresponding to the file icon 520 (refer to Fig. 4A) near the display position of the file icon 520 of the usage file displayed in the sharing display field 862.

In a case in which the relation degree button 865 is selected, the specifying of the related file is performed by using an area near the display position of the file icon 520 of the usage file as the search range in the workspace 510 (refer to Fig. 4A).

It should be noted that the type of the relation degree between the non-usage file specified as the related file and the usage file displayed in the sharing display field 862 or the number of the relation degree buttons is not limited to the example shown in Fig. 19A.

In a case of the present exemplary embodiment, in a case in which the setting related to the specifying of the related file is received and the finish button 868 (refer to Fig. 19A) is selected, as shown in Fig. 19B, a check screen 871 for checking the related file including the shared file is displayed on the operation screen 500.

The check screen 871 includes a relation display field 872 for displaying the non-usage file specified as the related file, and a confirmation button 876 for receiving an instruction to confirm the non-usage file displayed in the relation display field 872 as the related file.

The relation display field 872 is an area in which information related to the related file included in the shared file is displayed. In the relation display field 872, for example, the file name of the non-usage file specified as the related file is displayed.

Fig. 19B shows a case in which the non-usage file corresponding to the file icon 520 near the file icon 520 of the usage file is specified as the related file included in the shared file. In this case, in addition to the relation display field 872 and the confirmation button 876, the check screen 871 includes a range display field 873 for displaying a range "near the file icon 520 of the usage file" an enlargement button 874 for receiving an instruction to enlarge the range, and a reduction button 875 for receiving an instruction to reduce the range.

The range display field 873 displays an area in which the related file is specified, as "near the file icon 520 of the usage file" in the workspace 510 (refer to Fig. 4A). Stated another way, the range display field 873 displays a range in which the non-usage file is searched for in a case in which the related file is specified.

In the example shown in Fig. 19B, in the workspace 510 (refer to Fig. 4A) displayed in the range display field 873, in addition to the usage files "contract" and "confidentiality contract", a plurality of file icons 520 (refer to Fig. 4A) corresponding to the non-usage files "drawing A" and "drawing B" are displayed. Stated another way, in the example shown in Fig. 19B, the file icons 520 of the non-usage files "drawing A" and "drawing B" are displayed in the range near the file icon 520 of the usage file. The non-usage files "drawing A" and "drawing B" are specified as the related files included in the shared file, and the file names of the non-usage files "drawing A" and "drawing B" are displayed in the relation display field 872.

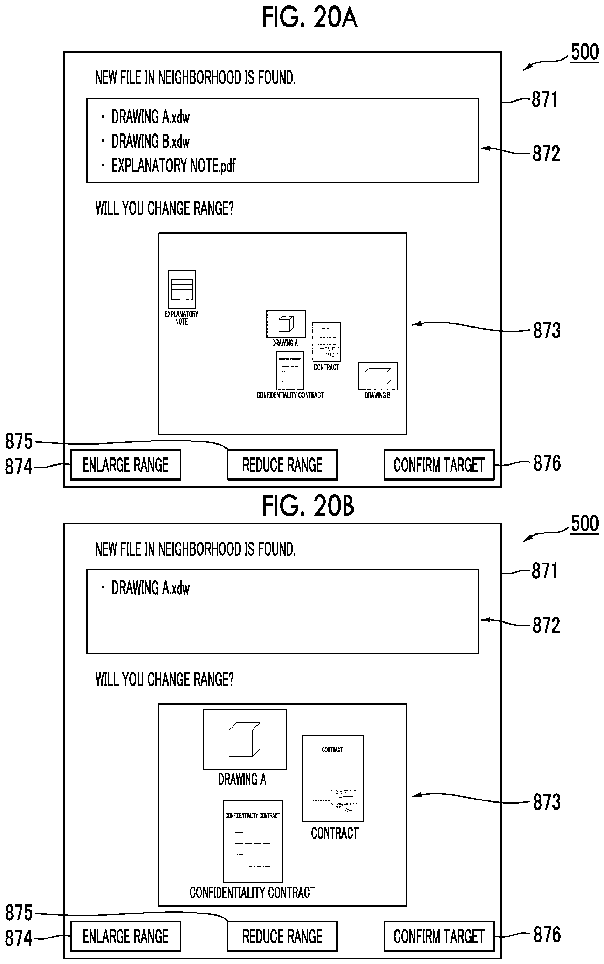

Figs. 20A and 20B are diagrams showing another example of the screen for checking the related file included in the shared file, in which Fig. 20A is a diagram showing a state in which a range in which the related file is specified is enlarged, and Fig. 20B is a diagram showing a state in which the range in which the related file is specified is reduced.

In Figs. 20A and 20B, a case in which an instruction to change the range "near the file icon 520 of the usage file" is received in the state shown in Fig. 19B is shown as an example.

In a case in which the enlargement button 874 is selected in the state shown in Fig. 19B, the range "near the file icon 520 of the usage file" is enlarged as shown in Fig. 20A, and the related file is specified.

In the example shown in Fig. 20A, in the workspace 510 (refer to Fig. 4A) displayed in the range display field 873, in addition to the file icons 520 of the usage files "contract" and "confidentiality contract", the file icons 520 of the non-usage files "drawing A", "drawing B", and "explanatory note" are displayed. Stated another way, in the example shown in Fig. 20A, the file icons 520 of the non-usage files "drawing A", "drawing B", and "explanatory note" are displayed in the range near the file icon 520 of the usage file. The non-usage files "drawing A", "drawing B", and "explanatory note" are specified as the related files included in the shared file, and the file names of the non-usage files "drawing A", "drawing B", and "explanatory note" are displayed in the relation display field 872.

In addition, in a case in which the reduction button 875 is selected in the state shown in Fig. 19B, the range "near the file icon 520 of the usage file" is reduced as shown in Fig. 20B, and the related file is specified.

In the example shown in Fig. 20B, in the workspace 510 (refer to Fig. 4A) displayed in the range display field 873, in addition to the file icons 520 of the usage files "contract" and "confidentiality contract", the file icons 520 of the non-usage file "drawing A" is displayed. Stated another way, in the example shown in Fig. 20B, the file icon 520 of the non-usage file "drawing A" is displayed in the range near the file icon 520 of the usage file. The non-usage file "drawing A" is specified as the related files included in the shared file, and the file names of the non-usage file "drawing A" is displayed in the relation display field 872.

In the example described above, in a case in which the file to be shared is designated by the user, a separate screen is displayed for the usage file and the related file, and the display format is different between the usage file and the related file, the present invention is not limited to this configuration. It suffices that the usage file and the related file are displayed to be identifiable in a case in which the user designates the file to be shared.

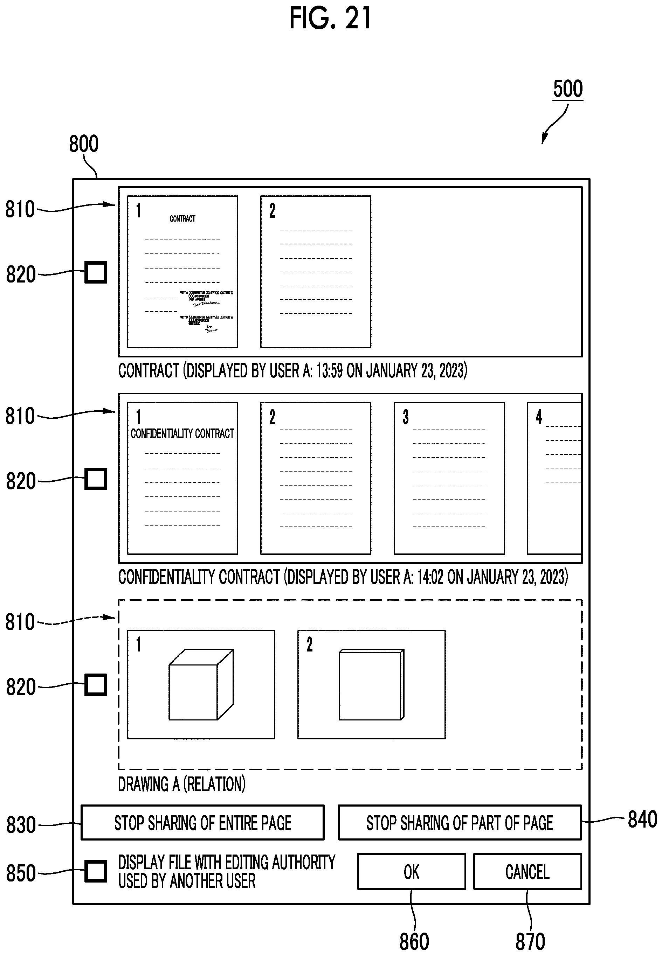

Fig. 21 is a diagram showing still another example of the display of the operation screen 500 to which the present exemplary embodiment is applied, and shows an example of the screen for presenting the candidates for the shared file.

In Fig. 21, the operation screen 500 displayed on the user terminal 10 of the user A is shown as an example.

In the example shown in Fig. 21, the presentation screen 800 presents the related files together with the usage files as the candidates for the shared file.

In the candidate display field 810 for displaying the related file, information related to the related file, which is the non-usage file related to the usage file among the non-usage files that is not used by the user while participating in the remote conference, is displayed. As the information related to the related file, for example, an image corresponding to the page of the related file, a file name of the related file, or the like is displayed. In addition, as the information related to the related file, for example, a text message, a symbol, or an image for giving the notification that the file of which the information is displayed in the candidate display field 810 is the related file may be displayed.

The display mode of the candidate display field 810 for displaying the related file may be made different from the display mode for the candidate display field 810 for displaying the usage file.

For example, while a frame line indicating an area in which the image corresponding to the page of the usage file is displayed is a solid line, as shown in Fig. 21, a frame line indicating an area in which the image corresponding to the page of the related file is displayed may be a broken line.

In addition, for example, the color given to the area in which the image corresponding to the page of the related file is displayed may be made different from the color given to the area in which the image corresponding to the page of the usage file is displayed.

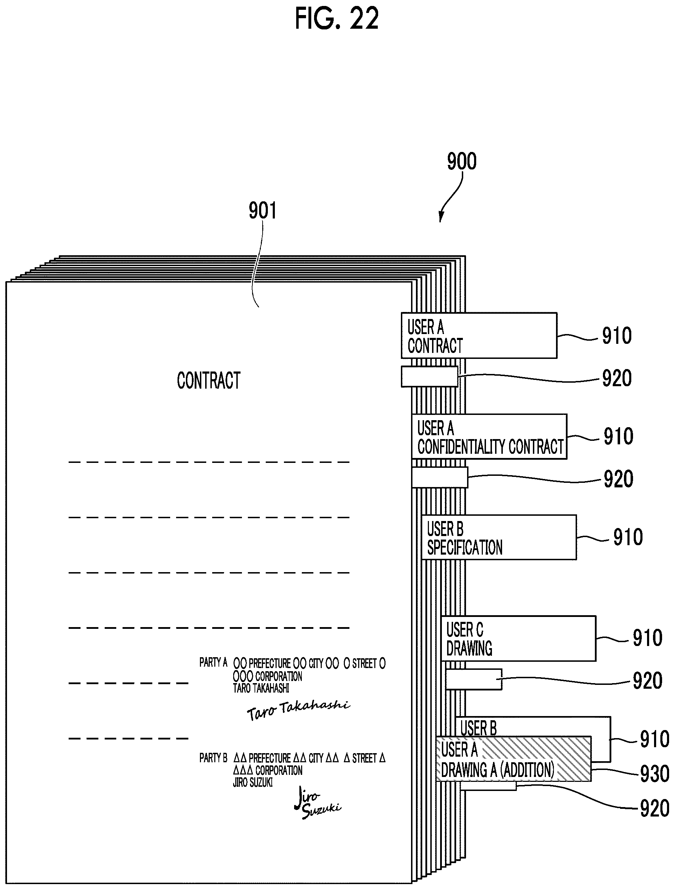

Fig. 22 is a diagram showing an example of the shared file 900 of which the related file is also shared.

In Fig. 22, a case in which the related file "drawing A" is designated to be shared by the user A is shown as an example.

In a case of the present exemplary embodiment, in a case in which the user A designates to share the related file in addition to the usage file, as shown in Fig. 22, the shared file 900 in which the plurality of files including the usage file and the related file are bundled as one file is shared with each of the plurality of participants.

In the example shown in Fig. 22, the shared file 900 includes an emphasis image 930 in which the related file is emphasized.

The emphasis image 930 is displayed in association with the first page of the related file. Stated another way, the emphasis image 930 is displayed in correspondence with each of the related files included in the shared file 900. In the emphasis image 930, the attribute information indicating an attribute of the corresponding related file is displayed.

In the example shown in Fig. 22, the emphasis image 930 including the user name of the user who makes the setting related to the shared file for the corresponding related file together with the file name of the corresponding related file, as the attribute information, is displayed.

In a case in which the emphasis image 930 is selected, the first page of the corresponding related file may be displayed.

The display mode of the emphasis image 930 is different from the display mode of the identification image 910 that is displayed in association with the first page of the usage file. Stated another way, among the files included in the shared file 900, the display mode is made different between the non-usage file that is not used in the remote conference and the usage file that is used.

For example, the color given to the emphasis image 930 is made different from the color given to the identification image 910. In addition, for example, the shape or the display size of the emphasis image 930 may be made different from the shape or the display size of the identification image 910.

In the example described above, a sticky image of the identification image 910, the notification image 920, or the emphasis image 930 is displayed to protrude from the page image included in the shared file 900, but the present invention is not limited to this configuration.

For example, the sticky image of the identification image 910, the notification image 920, or the emphasis image 930 may be displayed not to protrude from the page image.

In addition, for example, instead of the sticky image of the identification image 910, the notification image 920, or the emphasis image 930, the display mode of the page image may be made different based on information related to the corresponding file or page.

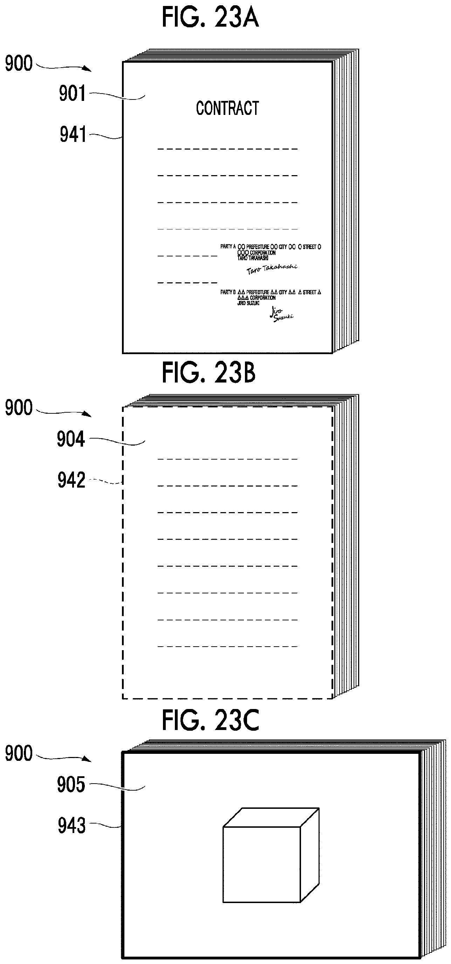

Figs. 23A and 23C are diagrams showing another example of the shared file 900 to which the present exemplary embodiment is applied, in which Fig. 23A is a diagram showing a state in which a page image 901 of the page that is used in the remote conference is displayed, Fig. 23B is a diagram showing a state in which a page image 904 of the page that is not used in the remote conference in the usage file is displayed, and Fig. 23C is a diagram showing a state in which a page image 905 of the page included in the related file is displayed.

In Figs. 23A and 23C, a case in which the identification image 910, the notification image 920, or the emphasis image 930 is not displayed is shown as an example.

In the example shown in Fig. 23A, the page image 901 corresponding to the page that is used in the remote conference is displayed among the pages included in the usage file. In addition, an image 941 that surrounds the page image 901 is displayed. The image 941 is, for example, an image in which an outline of the page image 901 is surrounded by a solid line.

In the example shown in Fig. 23B, the page image 904 corresponding to the page that is not used in the remote conference is displayed among the pages included in the usage file. In addition, an image 942 that surrounds the page image 904 is displayed.

The display form of the image 942 is different from the display form of the image 941 (refer to Fig. 23A). The image 942 is, for example, an image in which an outline of the page image 904 is surrounded by a broken line.

In the example shown in Fig. 23C, the page image 905 of the page included in the related file is displayed. In addition, an image 943 that surrounds the page image 905 is displayed.

The display form of the image 943 is different from the display form of the image 941 (refer to Fig. 23A) or the display form of the image 942 (refer to Fig. 23B). The image 943 is, for example, an image in which an outline of the page image 905 is surrounded by a solid line thicker than the image 941.

It should be noted that the images 941, 942, and 943 are not limited to the configuration in which the shapes are made different from each other, and the colors given to the respective images 941, 942, and 943 may be different from each other.

In the example described above, the plurality of files including at least the usage file are shared in a bundled state as one file, but the present invention is not limited to this configuration. For example, each of the files to be shared may be shared with each of the plurality of participants in a separate state.

### [Processing of Notification of Setting Related to Shared File]

A processing example in a case of giving the notification of the setting related to the shared file for the file included in the candidates for the shared file will be described.

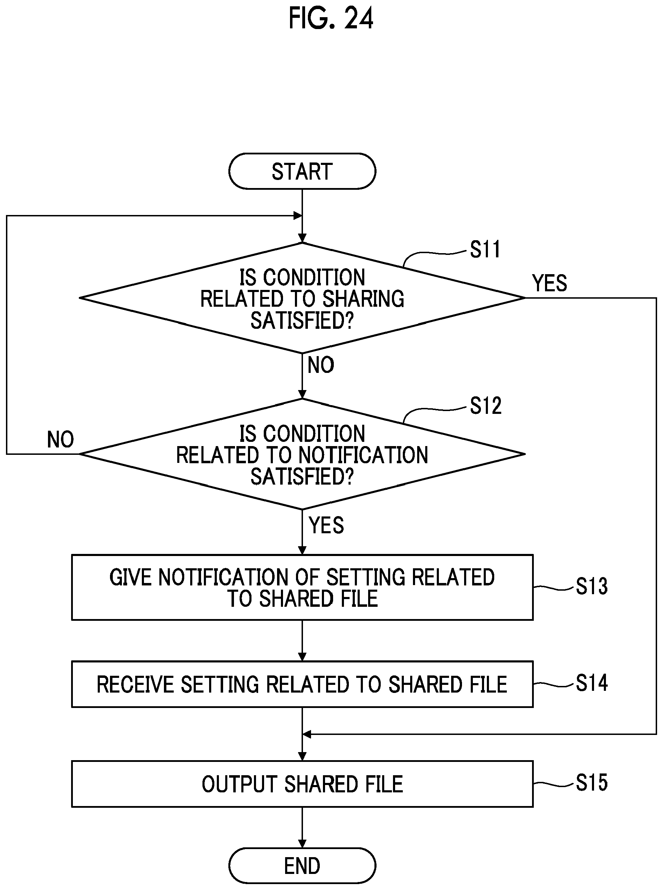

Fig. 24 is a flowchart showing a flow of processing of giving the notification of the setting related to the shared file by the sharing result output unit 207 of the file management server 20 according to the present exemplary embodiment.

In Fig. 24, a case in which the notification of the setting related to the shared file is given to the other participant different from the participant who uses the usage file included in the candidates for the shared file in the remote conference is shown as an example.

First, the sharing result output unit 207 determines whether or not the condition related to the sharing is satisfied for the candidates for the shared file (S11).

Specifically, the sharing result output unit 207 determines whether or not the candidates for the shared file satisfy the condition related to the sharing.

In a case in which the condition related to the sharing is satisfied (YES in S11), the sharing result output unit 207 outputs the shared file without giving the notification of the setting related to the shared file (S15), and finishes the processing.

In S11, in a case in which the condition related to the sharing is not satisfied (NO in S11), the sharing result output unit 207 determines whether or not the condition related to the notification is satisfied for the candidates for the shared file (S12).

In a case in which the condition related to the notification is not satisfied (NO in S12), the sharing result output unit 207 determines whether or not the condition related to the sharing is satisfied for the candidates for the shared file.

In S12, in a case in which the condition related to the notification is satisfied (YES in S12), the sharing result output unit 207 gives the notification of the setting related to the shared file (S13). Specifically, the sharing result output unit 207 gives the notification of the setting related to the shared file to the other participant being different from the participant who uses the usage file included in the candidates for the shared file in the remote conference and having the authority to designate the usage file.

In this processing example, the other participant to which the notification of the setting related to the shared file is given makes the setting related to the shared file via the user terminal 10. Specifically, the other participant to which the notification of the setting related to the shared file is given makes the setting related to the shared file for the usage file for which the participant has any authority among the usage files included in the candidates for the shared file.

Then, the sharing result output unit 207 receives the setting related to the shared file (S14).

Then, the sharing result output unit 207 outputs the shared file (S15), and finishes the processing.

Specifically, the sharing result output unit 207 receives the setting related to the shared file by the other participant to which the notification is given, based on the request information acquired by the request information acquisition unit 202, for the usage file. In a case in which the setting related to the shared file is completed by the other participant different from the participant who uses the usage file during the remote conference, the sharing result output unit 207 specifies that all the plurality of participants have completed the setting related to the shared file for the candidates for the shared file. The sharing result output unit 207 specifies the shared file based on the setting related to the shared file, outputs the shared file to each of the plurality of user terminals 10, and finishes the processing.

In the example described above, the other participant in the remote conference is notified of the setting related to the shared file, but the notification may be given to the user who does not participate in the remote conference. Specifically, the notification of the setting related to the shared file may be given even to the user who does not participate in the remote conference, for example, to the user who creates the usage file or the user of which the user information is related to the user information of the participant who uses the usage file.

### <Modification Example 1>

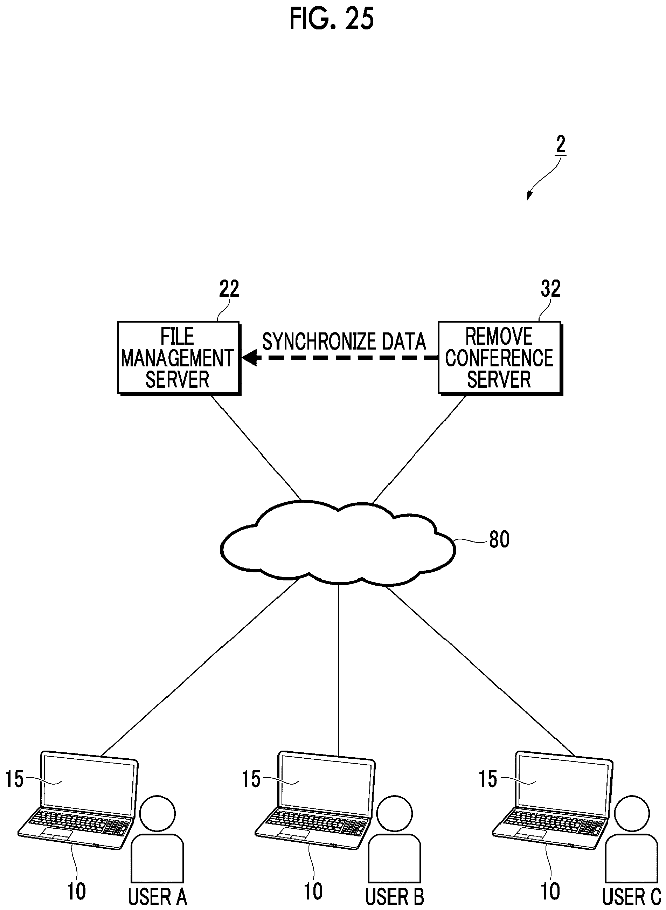

Fig. 25 is a diagram showing an example of a configuration of a file sharing system 2 to which the present exemplary embodiment is applied.

The file sharing system 2 to which the present exemplary embodiment is applied is different from the file sharing system 1 in that the conference information or the participant information is acquired from a remote conference server 32. Hereinafter, the difference from the file sharing system 1 will be described. The same reference numerals are used for the same components in the file sharing system 1 and the file sharing system 2, and the detailed description will be omitted.

The file sharing system 2 is configured by connecting the user terminal 10, a file management server 22 to which the data is provided, and the remote conference server 32 that provides the data, via the communication line 80.

In a case of the present exemplary embodiment, various types of information, such as information related to the remote conference itself or information for specifying the participant of the remote conference are provided as the data from the remote conference server 32 to the file management server 22. Stated another way, the data managed by the remote conference server 32 is synchronized with the file management server 22. The file management server 22 and the remote conference server 32 are linked with each other by using, for example, an application programming interface (API) provided by the file management server 22 and the remote conference server 32.

As a result, the file management server 20 does not need to acquire the information related to the remote conference managed by the remote conference server 32 based on the operation of the user on the operation screen 500 (refer to Fig. 4B) for providing the file management service. In addition, the user does not need to perform the operation for causing the file management server 20 to acquire the information related to the remote conference.

### <Modification Example 2>

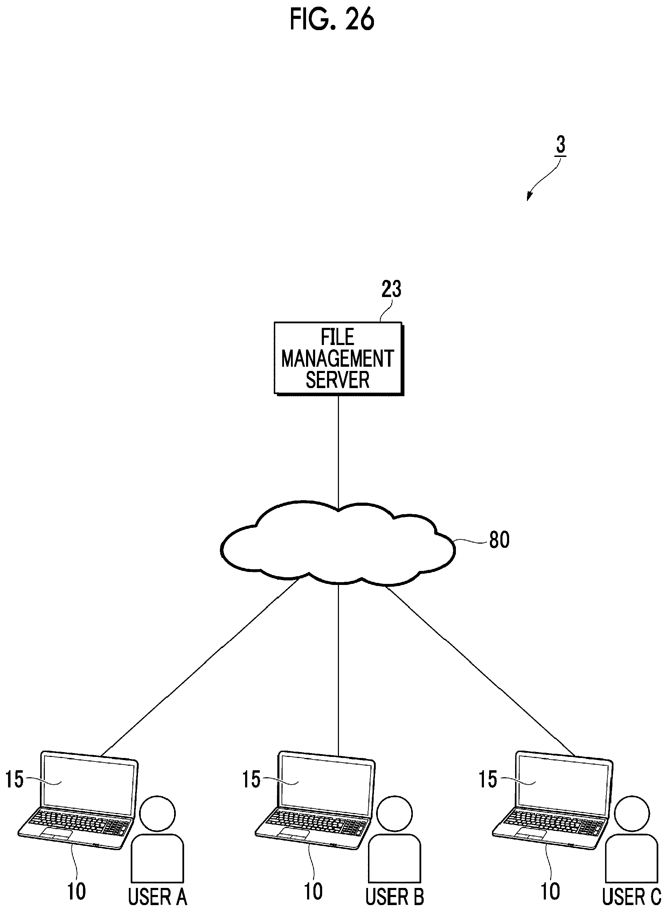

Fig. 26 is a diagram showing an example of a configuration of a file sharing system 3 to which the present exemplary embodiment is applied.

The file sharing system 3 to which the present exemplary embodiment is applied is different from the file sharing system 1 in that a file management server 23 also provides the remote conference service. Hereinafter, the difference from the file sharing system 1 will be described. The same reference numerals are used for the same components in the file sharing system 1 and the file sharing system 3, and the detailed description will be omitted.

The file sharing system 3 is configured by connecting the user terminal 10 and the file management server 23 that provides the file management service and the remote conference service, via the communication line 80.

In a case of the present exemplary embodiment, the file management server 23 manages the remote conference in which each user participates via the user terminal 10. Specifically, in response to the request from the user terminal 10, the file management server 23 executes the processing of starting and finishing the remote conference, sharing the image displayed on the display unit 15 of the user terminal 10 in the remote conference, and the like.

As a result, the file management server 20 does not need to acquire the information related to the remote conference from an apparatus different from the file management server 20. In addition, in a case in which the user conducts the remote conference while using the file management service, the user does not need to use a plurality of services.

The processing performed by the file sharing system in each exemplary embodiment is, for example, prepared as a program, such as application software. The program executed by the CPU 11a as an example of the processor in each exemplary embodiment can be provided in a state of being stored in a computer-readable recording medium, such as a magnetic recording medium (magnetic tape, magnetic disk, or the like), an optical recording medium (optical disk or the like), an optical magnetic recording medium, or a semiconductor memory. In addition, the program executed by the CPU 11a may be provided by using a communication unit, such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) A file sharing system comprising:
   one or a plurality of processors,
   wherein the one or plurality of processors are configured to:
      acquire conference time information indicating time at which a remote conference is conducted;
      acquire participant information that is information related to a plurality of participants who participate in the remote conference;
      specify a usage file that is used in the remote conference based on the conference time information; and
      share a file including at least the usage file with each of the plurality of participants.
(((2))) The file sharing system according to (((1))), wherein the one or plurality of processors are configured to:
   share the usage file that is designated by the participant from among specified usage files with the plurality of participants.
(((3))) The file sharing system according to (((2))),
   wherein the participant who designates the usage file is a participant who uses the usage file during the remote conference.
(((4))) The file sharing system according to (((2))),
   wherein the participant who designates the usage file is another participant being different from a participant who uses the usage file during the remote conference and having authority to designate the usage file.
(((5))) The file sharing system according to any one of (((1))) to (((4))),
   wherein the file includes the usage file and a non-usage file that is not used in the remote conference.
(((6))) The file sharing system according to (((5))),
   wherein the non-usage file is a related file that is related to the usage file.
(((7))) The file sharing system according to (((6))), wherein the one or plurality of processors are configured to:
   display the specified usage file and the related file to be identifiable in a case in which the participant designates a file to be shared.
(((8))) The file sharing system according to (((7))), wherein the one or plurality of processors are configured to:
   make a display format different between the usage file and the related file.
(((9))) The file sharing system according to any one of (((1))) to (((8))), wherein the one or plurality of processors are configured to:
   receive designation of a file that is not shared with each of the plurality of participants; and
   not share the file that is designated not to be shared by the participant, with each of the plurality of participants.
(((10))) The file sharing system according to (((9))), wherein the one or plurality of processors are configured to:
   not share a file that is designated not to be shared even in a case in which the file is the specified usage file, with each of the plurality of participants.
(((11))) The file sharing system according to (((9))), wherein the one or plurality of processors are configured to:
   not share a page of a file that is designated not to be shared even in a case in which the file is a file to be shared or a part of the page that is designated not to be shared, with each of the plurality of participants.
(((12))) The file sharing system according to any one of (((1))) to (((11))), wherein the one or plurality of processors are configured to:
   make a display mode different between the usage file and a non-usage file that is not used in the remote conference among files that are shared.
(((13))) The file sharing system according to any one of (((1))) to (((12))), wherein the one or plurality of processors are configured to:
   make a display mode different between a page that is used during the remote conference and a page that is not used during the remote conference among files that are shared.
(((14))) The file sharing system according to any one of (((1))) to (((13))), wherein the one or plurality of processors are configured to:
   in a case in which a plurality of shared files that are shared are displayed on a display unit, display attribute information indicating an attribute of a shared file on the display unit in correspondence with each of the shared files.
(((15))) The file sharing system according to any one of (((1))) to (((14))), wherein the one or plurality of processors are configured to:
   in a case in which a condition related to sharing is satisfied, share the file including at least the usage file with each of the plurality of participants.
(((16))) The file sharing system according to (((15))),
   wherein the condition related to the sharing is that all the participants of the remote conference have completed a setting related to the sharing.
(((17))) The file sharing system according to (((16))), wherein the one or plurality of processors are configured to:
   in a case in which another participant being different from a participant who uses the usage file during the remote conference and having authority to designate the usage file has completed the setting, specify that all the participants of the remote conference have completed the setting.
(((18))) The file sharing system according to (((17))), wherein the one or plurality of processors are configured to:
   in a case in which a predetermined condition is satisfied, notify the other participant of the setting of the usage file before the sharing with each of the plurality of participants.

According to the aspect of (((1))), it is possible to improve the efficiency of the work of sharing the contents of the remote conference, as compared with a case in which only the page displayed during the remote conference is shared.

According to the aspect (((2))), it is possible to improve the efficiency of the work of sharing the needed information in the contents of the remote conference, as compared with a case in which all the files that are used are shared.

According to the aspect (((3))), it is possible to improve the efficiency of the work of selecting the needed information in the contents of the remote conference, as compared with a configuration in which the participant who does not uses the file that is used during the remote conference is made to determine whether or not to share the file.

According to the aspect (((4))), it is possible to improve the efficiency of the work of selecting the needed information in the contents of the remote conference, as compared with a configuration in which only the participant who uses the file that is used during the remote conference is made to determine whether or not to share the file.

According to the aspect of (((5))), it is possible to supplement the contents of the remote conference, as compared with a case in which only the file that is used during the remote conference is shared.

According to the aspect of (((6))), it is possible to share the file related to the file that is used during the remote conference.

According to the aspect (((7)))), it is possible to improve the efficiency of the work of distinguishing and selecting the usage file and the related file, as compared with a configuration in which the display modes of the usage file and the related file are made uniform in a case in which the file to be shared is designated.

According to the aspect (((8)))), it is possible to improve the efficiency of the work of distinguishing the usage file and the related file, as compared with a configuration in which the usage file and the related file are displayed in the same display format in a case in which the file to be shared is designated.

According to the aspect (((9))), it is possible to prevent the information that the participant does not want to share after the remote conference from being viewed from the other participant after the remote conference.

According to the aspect (((10))), it is possible to prevent the contents of the file that the participant does not want to share after the remote conference even in a case in which the file is the file that is used during the remote conference from being viewed from the other participant after the remote conference.

According to the aspect of (((11))), one information included in one file among the files to be shared is not shared, but other information can be shared.

According to the aspect of (((12))), it is possible to notify the participant of the file that is used during the remote conference after the remote conference in a case in which the files that are shared are viewed.

According to the aspect of (((13))), it is possible to notify the participant of the page used during the remote conference after the remote conference in a case in which the files that are shared are viewed.

According to the aspect of (((14))), it is possible to notify the participant of the attribute information of the file included in the files that are shared in a case in which the files that are shared are viewed.

According to the aspect of (((15))), it is possible to secure a period for selecting the information related to the contents of the remote conference before the file is shared.

According to the aspect of (((16))), it is possible to make all the participants select the information related to the contents of the remote conference before the file is shared.

According to the aspect of (((17))), it is possible to select the information related to the contents of the remote conference before the file is shared.

According to the aspect of (((18))), it is possible to promote the selection of the information to be shared after the remote conference.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1, 2, 3: file sharing system
10: user terminal
11a: CPU
15: display unit
20: file management server
30: remote conference server
201: file acquisition unit
202: request information acquisition unit
203: conference information acquisition unit
204: participant information acquisition unit
205: usage information acquisition unit
206: sharing candidate output unit
207: sharing result output unit
208: file DB
209: conference DB
210: user information DB
500: operation screen
520: file icon
560: enlarged image
800: presentation screen
831: page setting screen
841: portion setting screen
861: related file setting screen
871: check screen
900: shared file
901, 902, 903, 904, 905: page image
910: identification image
920: notification image
930: emphasis image

## Claims

1. A file sharing system comprising:
one or a plurality of processors,
wherein the one or plurality of processors are configured to:
acquire conference time information indicating time at which a remote conference is conducted;
acquire participant information that is information related to a plurality of participants who participate in the remote conference;
specify a usage file that is used in the remote conference based on the conference time information; and
share a file including at least the usage file with each of the plurality of participants.

2. The file sharing system according to claim 1, wherein the one or plurality of processors are configured to:
share the usage file that is designated by the participant from among specified usage files with the plurality of participants.

3. The file sharing system according to claim 2,
wherein the participant who designates the usage file is a participant who uses the usage file during the remote conference.

4. The file sharing system according to claim 2,
wherein the participant who designates the usage file is another participant being different from a participant who uses the usage file during the remote conference and having authority to designate the usage file.

5. The file sharing system according to any one of claims 1 to 4,
wherein the file includes the usage file and a non-usage file that is not used in the remote conference.

6. The file sharing system according to claim 5,
wherein the non-usage file is a related file that is related to the usage file.

7. The file sharing system according to claim 6, wherein the one or plurality of processors are configured to:
display the specified usage file and the related file to be identifiable in a case in which the participant designates a file to be shared.

8. The file sharing system according to any one of claims 1 to 7, wherein the one or plurality of processors are configured to:
receive designation of a file that is not shared with each of the plurality of participants; and
not share the file that is designated not to be shared by the participant, with each of the plurality of participants.

9. The file sharing system according to any one of claims 1 to 8, wherein the one or plurality of processors are configured to:
make a display mode different between the usage file and a non-usage file that is not used in the remote conference among files that are shared.

10. The file sharing system according to any one of claims 1 to 9, wherein the one or plurality of processors are configured to:
make a display mode different between a page that is used during the remote conference and a page that is not used during the remote conference among files that are shared.

11. The file sharing system according to any one of claims 1 to 10, wherein the one or plurality of processors are configured to:
in a case in which a plurality of shared files that are shared are displayed on a display unit, display attribute information indicating an attribute of a shared file on the display unit in correspondence with each of the shared files.

12. The file sharing system according to any one of claims 1 to 11, wherein the one or plurality of processors are configured to:
in a case in which a condition related to sharing is satisfied, share the file including at least the usage file with each of the plurality of participants.

13. The file sharing system according to claim 12,
wherein the condition related to the sharing is that all the participants of the remote conference have completed a setting related to the sharing.

14. The file sharing system according to claim 13, wherein the one or plurality of processors are configured to:
in a case in which another participant being different from a participant who uses the usage file during the remote conference and having authority to designate the usage file has completed the setting, specify that all the participants of the remote conference have completed the setting.

15. A file sharing program causing a computer to realize:
a function of acquiring conference time information indicating time at which a remote conference is conducted;
a function of acquiring participant information that is information related to a plurality of participants who participate in the remote conference;
a function of specifying a usage file that is used in the remote conference based on the conference time information; and
a function of sharing a file including at least the usage file with each of the plurality of participants.
